# EUROPEAN PATENT APPLICATION

(11) **EP 4 586 715 A1**
(43) Date of publication of application: **16.07.2025**
(21) Application number: 22963100.7
(22) Date of filing: 27.10.2022
(51) Int. Cl.: H04W 72/04, H04L 27/00

(54) **COMMUNICATION METHOD AND APPARATUS**

(71) Applicant: Huawei Technologies Co., Ltd., Shenzhen, Guangdong 518129 (CN)
(72) Inventor: LI, Zhongfeng, Shenzhen, Guangdong 518129 (CN)
(74) Representative: Pfenning, Meinig & Partner mbB
(86) International application number: PCT/CN2022/128053
(87) International publication number: WO 2024/087116

(57) **Abstract**

This application provides a communication method and apparatus that may be used in a receiving device or a central scheduling device. The communication method includes: determining a first indication, where the first indication indicates whether one or more transmitting devices perform resource reservation for a signal and/or a channel sent to a receiving device; and sending the first indication to the one or more transmitting devices. It can be learned that the receiving device or the central scheduling device indicates, to the one or more transmitting devices, whether to perform resource reservation for the signal and/or the channel sent to the receiving device, and the one or more transmitting devices determine, based on the first indication, whether to perform resource reservation for the signal and/or the channel sent to the receiving device. Therefore, when the receiving device receives the signal and/or the channel from the one or more transmitting devices, an automatic gain control operation does not need to be performed using a reserved resource. This helps reduce resource overheads caused by the automatic gain control operation.

## Description

### TECHNICAL FIELD

This application relates to the field of communication technologies, and in particular, to a communication method and apparatus.

### BACKGROUND

Near-far effect of different transmit ends causes large fluctuation in signals of a receive end. Therefore, when receiving signals and/or channels from different transmit ends, the receive end needs to perform an automatic gain control (automatic gain control, AGC) operation, to receive the signals and/or the channels at adaptive receive power.

The receive end needs some processing time to perform the AGC operation. Currently, the transmit end reserves a 1^{st} symbol of a sent signal and/or channel for the receive end to perform the AGC operation. However, in the manner of reserving a symbol by the transmit end for the receive end to perform the AGC operation, the AGC operation causes large resource overheads.

### SUMMARY

Embodiments of this application provide a communication method and apparatus, to help reduce resource overheads caused by an AGC operation.

According to a first aspect, an embodiment of this application provides a communication method. The communication method in this aspect is described from a receiving device side (may be applied to a device or a chip in a receiving device), or is described from a central scheduling device side (may be applied to a device or a chip in a central scheduling device). In the method, a first indication is determined, where the first indication indicates whether one or more transmitting devices perform resource reservation for a signal and/or a channel sent to a receiving device; and the first indication is sent to the one or more transmitting devices.

It can be learned that the receiving device or the central scheduling device indicates, to the one or more transmitting devices, whether to perform resource reservation for the signal and/or the channel sent to the receiving device, and each of the one or more transmitting devices does not need to perform resource reservation by default for the signal and/or the channel sent to the receiving device, but determines, based on the first indication, whether to perform resource reservation for the signal and/or the channel sent to the receiving device. Therefore, when the receiving device receives the signal and/or the channel from each of the one or more transmitting devices, an automatic gain control operation does not need to be performed using a reserved resource, so that resource overheads caused by the automatic gain control operation can be reduced.

In a possible implementation, the first indication specifically indicates a first transmitting device to perform resource reservation for a signal and/or a channel sent to the receiving device, and indicates one or more second transmitting devices not to perform resource reservation for a signal and/or a channel sent to the receiving device.

A time domain resource occupied by the signal and/or the channel sent by the one or more second transmitting devices to the receiving device is located after a time domain resource occupied by the signal and/or the channel sent by the first transmitting device to the receiving device.

Therefore, in this manner, the receiving device performs the automatic gain control operation using a reserved resource when receiving the signal and/or the channel from the first transmitting device; and does not perform automatic gain control using the reserved resource when receiving the signal and/or the channel, sent by the one or more second transmitting devices, that occupy/occupies the time domain resource located after the time domain resource occupied by the signal and/or the channel sent by the first transmitting device. This helps reduce resource overheads caused by the automatic gain control operation.

In a possible implementation, both the first transmitting device and the one or more second transmitting devices are located in a first geographical location range of the receiving device or a first transmission delay range; and/or when the first transmitting device and the one or more second transmitting devices send signals and/or channels to the receiving device, signal strength of the signals and/or the channels received by the receiving device falls within a first signal strength range.

When both the first transmitting device and the one or more second transmitting devices are located in the first geographical location range of the receiving device or the first transmission delay range, a difference between a distance from the first transmitting device to the receiving device and a distance from the one or more second transmitting devices to the receiving device is small. Therefore, when the receiving device separately receives the signals and/or the channels from the first transmitting device and the one or more second transmitting devices, the signal strength of the received signals and/or channels fluctuates within a small range, for example, fluctuates within a preset range. The signal strength of the signals and/or the channels received by the receiving device is in direct proportion to power. In this case, when the receiving device separately receives the signals and/or the channels from the first transmitting device and the one or more second transmitting devices, the power fluctuates within a specific range, that is, the power fluctuates within a small range.

When the first transmitting device and the one or more second transmitting devices send the signals and/or the channels to the receiving device, the signal strength of the signals and/or the channels received by the receiving device falls within the first signal strength range. It indicates that power at which the receiving device separately receives the signals and/or the channels from the first transmitting device and the one or more second transmitting devices also fluctuates within a specific range.

When the power at which the receiving device receives the signals and/or the channels from the first transmitting device and the one or more second transmitting devices fluctuates within the specific range, this helps the first device indicate, to the first transmitting device and the one or more second transmitting devices, whether each transmitting device performs resource reservation for the signal and/or the channel sent to the receiving device.

In a possible implementation, time domain resources occupied by the signals and/or the channels sent by the first transmitting device and the one or more second transmitting devices to the receiving device are consecutive in time domain. In other words, when receiving the signals and/or the channels from the first transmitting device and the one or more second transmitting devices, the receiving device does not receive a signal and/or a channel from another transmitting device. Therefore, the one or more second transmitting devices may not need to perform resource reservation for the signal and/or the channel sent to the receiving device, so that resource overheads caused by the automatic gain control operation performed by the receiving device can be reduced.

In another possible implementation, time domain resources occupied by the signals and/or the channels sent by the first transmitting device and the one or more second transmitting devices to the receiving device are inconsecutive in time domain, and no third transmitting device sends a signal and/or a channel to the receiving device between the time domain resources occupied by the signals and/or the channels sent by the first transmitting device and the one or more second transmitting devices to the receiving device.

The third transmitting device is a transmitting device located outside the first geographical location range of the receiving device or the first transmission delay range, and/or a transmitting device that sends a signal and/or a channel to the receiving device, where signal strength of the signal and/or the channel received by the receiving device is outside the first signal strength range.

In other words, when the time domain resources occupied by the signals and/or the channels sent by the first transmitting device and the one or more second transmitting devices to the receiving device are inconsecutive in time domain, no other third transmitting device performs sending for the receiving device in the time domain resource range occupied by the signals and/or the channels sent by the first transmitting device and the one or more second transmitting devices to the receiving device. Therefore, the receiving device or the central scheduling device may indicate the first transmitting device to perform resource reservation for the signal and/or the channel sent to the receiving device, and indicate the one or more second transmitting devices not to perform resource reservation for the signal and/or the channel sent to the receiving device, so that resource overheads caused by the automatic gain control operation performed by the receiving device can be reduced.

In a possible implementation, the receiving device may further receive a second indication from the first transmitting device and/or the one or more second transmitting devices, where the second indication indicates whether to perform resource reservation for a signal and/or a channel sent to the receiving device. Therefore, the receiving device may receive the signals and/or the channels from the first transmitting device and the one or more second transmitting devices based on the second indication.

In this manner, the first transmitting device and the one or more second transmitting devices may feed back, to the receiving device, whether to perform resource reservation for the signals and/or the channels sent to the receiving device, so that the receiving device receives the signal and/or the channel from each transmitting device based on the feedback of each transmitting device.

In a possible implementation, the receiving device or the central scheduling device may further send a third indication, where the third indication indicates one or more fourth transmitting devices to adjust, to a first time domain resource, a time domain resource occupied by a signal and/or a channel sent by the one or more fourth transmitting devices to the receiving device.

The fourth transmitting device is a transmitting device whose geographical location is in the first geographical location range or that is located in the first transmission delay range, and/or a transmitting device that sends a signal and/or a channel to the receiving device, where signal strength of the signal received by the receiving device falls within the first signal strength range. The fourth transmitting device includes the first transmitting device and/or the one or more second transmitting devices.

When the fourth transmitting device is the first transmitting device and/or the one or more second transmitting devices, before determining the first indication, the receiving device or the central scheduling node device sends the third indication to the fourth transmitting device, so that the fourth transmitting device adjusts, to the first time domain resource, the time domain resource occupied by the signal and/or the channel sent to the receiving device. Therefore, the time domain resources occupied by the signals and/or the channels sent by the first transmitting device and the one or more second transmitting devices to the receiving device are consecutive.

When the fourth transmitting device is a transmitting device other than the first transmitting device and the one or more second transmitting devices, the receiving device or the central scheduling device may further send the first indication to the fourth transmitting device, where the first indication indicates the fourth transmitting device not to perform resource reservation for a signal and/or a channel sent to the receiving device. Therefore, when receiving the signal and/or the channel from the fourth transmitting device, the receiving device does not perform automatic gain control. This helps reduce resource overheads caused by automatic gain control.

In a possible implementation, when the one or more transmitting devices and the receiving device are used for multi-hop communication, the first indication specifically indicates whether a transmitting device used for multi-hop communication performs resource reservation for a signal and/or a channel sent to a receiving device at a current hop when communicating with the receiving device at the current hop of the transmitting device.

In this manner, the transmitting device used for multi-hop communication may determine, based on the first indication, whether to perform resource reservation for the signal and/or the channel sent to the receiving device at the current hop, so that resource overheads caused by the automatic gain control operation performed by the receiving device at the current hop using the reserved resource can be reduced.

In a possible implementation, the signal and/or the channel sent by the one or more transmitting devices to the receiving device are/is periodically sent. In this manner, when sending a periodic signal and/or a periodic channel to the receiving device in each periodicity, each of the one or more transmitting devices determines, based on the first indication, whether to perform resource reservation for the signal and/or the channel sent to the receiving device. Therefore, when receiving the periodic signal and/or the periodic channel in each periodicity of each transmitting device, the receiving device does not need to perform the automatic gain control operation using the reserved resource by default, so that resource overheads can be reduced.

In a possible implementation, the resource reservation includes puncturing a symbol used to send a signal and/or a channel to the receiving device, to ensure that the receiving device performs the automatic gain control operation on the symbol.

In another possible implementation, the resource reservation includes repeatedly sending, on a symbol, a signal and/or a channel sent to the receiving device, so that the receiving device receives as many signals and/or channels as possible after completing the automatic gain control operation. This improves receiving performance.

In a possible implementation, the first indication specifically indicates whether the one or more transmitting devices perform, in a first frequency domain resource, resource reservation for the signal and/or the channel sent to the receiving device.

In a possible implementation, a fourth indication may further be sent, where the fourth indication indicates whether one or more fifth transmitting devices perform, in a second frequency domain resource, resource reservation for a signal and/or a channel sent to the receiving device.

A time domain resource occupied by the signal and/or the channel sent by the one or more transmitting devices to the receiving device overlaps a time domain resource occupied by the signal and/or the channel sent by the one or more fifth transmitting devices to the receiving device. The overlapping includes partial overlapping or complete overlapping.

It can be learned that when the time domain resource occupied by the signal and/or the channel sent by the one or more transmitting devices to the receiving device partially or completely overlaps the time domain resource occupied by the signal and/or the channel sent by the one or more fifth transmitting devices to the receiving device, the one or more transmitting devices and the one or more fifth transmitting devices may send signals and/or channels to the receiving device using different frequency domain resources.

In addition, in this manner, each transmitting device may not perform resource reservation by default for a signal and/or a channel sent to the receiving device, so that when receiving the signal and/or the channel from each transmitting device, the receiving device does not perform an automatic gain control operation using the reserved resource by default. This further reduces resource overheads caused by automatic gain control performed by the receiving device.

According to a second aspect, an embodiment of this application further provides a communication method. The communication method in this aspect corresponds to the communication method in the first aspect. The communication method in this aspect is described from a transmitting device side (may be applied to a device or a chip in a transmitting device). In the method, the transmitting device receives a first indication, where the first indication indicates whether one or more transmitting devices perform resource reservation for a signal and/or a channel sent to a receiving device. The transmitting device determines, based on the first indication, whether to perform resource reservation for the signal and/or the channel sent to the receiving device.

It can be learned that the transmitting device determines, based on the received first indication, whether to perform resource reservation for the signal and/or the channel sent to the receiving device, instead of performing resource reservation by default for the signal and/or the channel sent to the receiving device. Therefore, when receiving the signal and/or the channel from the transmitting device, the receiving device does not need to perform an automatic gain control operation using a reserved resource, to further reduce resource overheads caused by the automatic gain control operation.

In a possible implementation, the first indication specifically indicates a first transmitting device to perform resource reservation for a signal and/or a channel sent to the receiving device, and indicates one or more second transmitting devices not to perform resource reservation for a signal and/or a channel sent to the receiving device.

A time domain resource occupied by the signal and/or the channel sent by the one or more second transmitting devices to the receiving device is located after a time domain resource occupied by the signal and/or the channel sent by the first transmitting device to the receiving device.

In this way, when the transmitting device is the first transmitting device, the transmitting device determines, based on the first indication, to perform resource reservation for the signal and/or the channel sent to the receiving device. When the transmitting device is the second transmitting device, the transmitting device determines, based on the first indication, not to perform resource reservation for the signal and/or the channel sent to the receiving device. Therefore, when receiving the signal and/or the channel from the second transmitting device, the receiving device does not perform the automatic gain control operation using the reserved resource, so that resource overheads caused by the automatic gain control operation can be reduced.

In a possible implementation, both the first transmitting device and the one or more second transmitting devices are located in a first geographical location range of the receiving device or a first transmission delay range; and/or when the first transmitting device and the one or more second transmitting devices send signals and/or channels to the receiving device, signal strength of the signals and/or the channels received by the receiving device falls within a first signal strength range.

In this manner, when the receiving device receives the signals and/or the channels from the first transmitting device and the one or more second transmitting devices, receive power at which the signals and/or the channels are received fluctuates within a small range. In this case, the first transmitting device performs resource reservation for the signal and/or the channel sent to the receiving device, and the one or more second transmitting devices may not perform resource reservation for the signal and/or the channel sent to the receiving device.

In a possible implementation, time domain resources occupied by the signals and/or the channels sent by the first transmitting device and the one or more second transmitting devices to the receiving device are consecutive in time domain. Therefore, when the first transmitting device performs resource reservation for the signal and/or the channel sent to the receiving device, the one or more second transmitting devices may not perform resource reservation for the signal and/or the channel sent to the receiving device, so that resource overheads caused by the automatic gain control operation performed by the receiving device can be reduced.

In another possible implementation, time domain resources occupied by the signals and/or the channels sent by the first transmitting device and the one or more second transmitting devices to the receiving device are inconsecutive in time domain, and no third transmitting device sends a signal and/or a channel to the receiving device between the time domain resources occupied by the signals and/or the channels sent by the first transmitting device and the one or more second transmitting devices to the receiving device.

The third transmitting device is a transmitting device located outside the first geographical location range of the receiving device or the first transmission delay range, and/or a transmitting device that sends a signal and/or a channel to the receiving device, where signal strength of the signal and/or the channel received by the receiving device is outside the first signal strength range.

In other words, when the time domain resources occupied by the signals and/or the channels sent by the first transmitting device and the one or more second transmitting devices to the receiving device are inconsecutive in time domain, no other transmitting device performs sending for the receiving device in the time domain resource range occupied by the signals and/or the channels sent by the first transmitting device and the one or more second transmitting devices to the receiving device.

Therefore, when the first transmitting device performs resource reservation for the signal and/or the channel sent to the receiving device, the one or more second transmitting devices may not perform resource reservation for the signal and/or the channel sent to the receiving device, so that resource overheads caused by the automatic gain control operation performed by the receiving device can be reduced.

In a possible implementation, the transmitting device may further send a second indication, where the second indication indicates whether to perform resource reservation for a signal and/or a channel sent to the receiving device; and send the signal and/or the channel to the receiving device based on the second indication. In this manner, the receiving device may determine, based on a feedback of the transmitting device, whether to perform the automatic gain operation when receiving the signal and/or the channel from the transmitting device.

In a possible implementation, the transmitting device may further receive a third indication, where the third indication indicates to adjust, to a first time domain resource, a time domain resource occupied by a signal and/or a channel sent to the receiving device; and adjust, to the first time domain resource, the time domain resource occupied by the signal and/or the channel sent to the receiving device.

In this manner, when the transmitting device is the first transmitting device and/or the one or more second transmitting devices, the receiving device or a central scheduling device determines whether the first transmitting device and the one or more second transmitting devices perform resource reservation for the signals and/or the channels sent to the receiving device.

In this manner, when the transmitting device is a transmitting device other than the first transmitting device and the one or more second transmitting devices, more transmitting devices may not perform resource reservation for signals and/or channels sent to the receiving device. This helps reduce resource overheads caused by performing the automatic gain control operation using the reserved resource.

In a possible implementation, when the one or more transmitting devices and the receiving device are used for multi-hop communication, the first indication specifically indicates whether a transmitting device used for multi-hop communication performs resource reservation for a signal and/or a channel sent to a receiving device at a current hop when communicating with the receiving device at the current hop of the transmitting device.

In this manner, the transmitting device used for multi-hop communication may determine, based on the first indication, whether to perform resource reservation for the signal and/or the channel sent to the receiving device at the current hop, so that resource overheads caused by the automatic gain control operation performed by the receiving device at the current hop using the reserved resource can be reduced.

In a possible implementation, the signal and/or the channel sent by the one or more transmitting devices to the receiving device are/is periodically sent. In this manner, when sending a periodic signal and/or a periodic channel to the receiving device in each periodicity, each transmitting device determines, based on the first indication, whether to perform resource reservation for the signal and/or the channel sent to the receiving device. Therefore, when receiving the periodic signal and/or the periodic channel in each periodicity of each transmitting device, the receiving device does not need to perform the automatic gain control operation using the reserved resource by default, so that resource overheads can be reduced.

In a possible implementation, the resource reservation includes puncturing a symbol used to send a signal and/or a channel to the receiving device, to ensure that the receiving device performs the automatic gain control operation on the symbol.

In another possible implementation, the resource reservation includes repeatedly sending, on a symbol, a signal and/or a channel sent to the receiving device, so that the receiving device receives as many signals and/or channels as possible after completing the automatic gain control operation. This improves receiving performance.

In a possible implementation, the first indication specifically indicates whether the one or more transmitting devices perform, in a first frequency domain resource, resource reservation for the signal and/or the channel sent to the receiving device.

In a possible implementation, the transmitting device may further receive a fourth indication, where the fourth indication indicates whether one or more fifth transmitting devices perform, in a second frequency domain resource, resource reservation for a signal and/or a channel sent to the receiving device. A time domain resource occupied by the signal and/or the channel sent by the one or more transmitting devices to the receiving device overlaps a time domain resource occupied by the signal and/or the channel sent by the one or more fifth transmitting devices to the receiving device. The overlapping includes partial overlapping or complete overlapping.

It can be learned that when the time domain resource occupied by the signal and/or the channel sent by the one or more transmitting devices to the receiving device partially or completely overlaps the time domain resource occupied by the signal and/or the channel sent by the one or more fifth transmitting devices to the receiving device, the one or more transmitting devices and the one or more fifth transmitting devices may send signals and/or channels to the receiving device using different frequency domain resources.

In addition, in this manner, each transmitting device may not perform resource reservation by default for a signal and/or a channel sent to the receiving device, so that when receiving the signal and/or the channel from each transmitting device, the receiving device does not perform the automatic gain control operation using the configured reserved resource by default. This further reduces resource overheads caused by the automatic gain control operation performed by the receiving device.

According to a third aspect, this application further provides a communication apparatus. The communication apparatus has some or all functions for implementing any one of the first aspect and the second aspect. For example, the communication apparatus may have functions for implementing some or all embodiments described in the first aspect of this application, or may have functions for independently implementing any embodiment of this application. The functions may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support receiving/sending of a signal. The communication apparatus may further include a storage unit. The storage unit is coupled to the processing unit and the communication unit, and configured to store program instructions and data that are necessary for the communication apparatus.

In an implementation, the communication apparatus includes a communication unit and a processing unit.

The processing unit is configured to determine a first indication, where the first indication indicates whether one or more transmitting devices perform resource reservation for a signal and/or a channel sent to a receiving device.

The communication unit is configured to send the first indication to the one or more transmitting devices.

In addition, in this aspect, the communication apparatus may further perform the method in the possible implementations of the first aspect. For another possible implementation, refer to related content in the first aspect. Details are not described herein again.

In another implementation, the communication apparatus includes a communication unit and a processing unit.

The communication unit is configured to receive a first indication, where the first indication indicates whether one or more transmitting devices perform resource reservation for a signal and/or a channel sent to a receiving device.

The processing unit is configured to determine, based on the first indication, whether to perform resource reservation for the signal and/or the channel sent to the receiving device.

In addition, in this aspect, the communication apparatus may further perform the method in the possible implementations of the first aspect. For another possible implementation, refer to related content in the second aspect. Details are not described herein again.

For example, the communication unit may be a transceiver, the storage unit may be a memory, and the processing unit may be a processor.

In an implementation, the apparatus includes a transceiver and a processor.

The processor is configured to determine a first indication, where the first indication indicates whether one or more transmitting devices perform resource reservation for a signal and/or a channel sent to a receiving device.

The transceiver is configured to send the first indication to the one or more transmitting devices.

In addition, in this aspect, for another possible implementation of the communication apparatus, refer to related content in the first aspect. Details are not described herein again.

In another implementation, the communication apparatus includes a transceiver and a processor.

The transceiver is configured to receive a first indication, where the first indication indicates whether one or more transmitting devices perform resource reservation for a signal and/or a channel sent to a receiving device.

The processor is configured to determine, based on the first indication, whether to perform resource reservation for the signal and/or the channel sent to the receiving device.

In addition, in this aspect, for another possible implementation of the communication apparatus, refer to related content in the second aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system on a chip (system on a chip, SoC). Whether the components are separately disposed on different chips or integrated and disposed on one or more chips usually depends on a requirement of a product design. An implementation form of the component is not limited in embodiments of this application.

According to a fourth aspect, this application further provides a processor, configured to perform the foregoing methods. In a process of performing the methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, during receiving of the input information by the processor, the transceiver receives the information, and inputs the information to the processor. Still further, after the transceiver receives the information, other processing may need to be performed on the information before the information is input into the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations such as sending and receiving directly performed by a radio frequency circuit and an antenna.

In an implementation process, the processor may be a processor specially configured to perform the methods, or a processor, for example, a general-purpose processor, that executes computer instructions in the memory to perform the methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a fifth aspect, this application further provides a communication system. The system includes one or more network devices and one or more terminal devices. In another possible design, the system may further include another device that interacts with the network device and the terminal device. The transmitting device and the receiving device in embodiments of this application are different terminal devices in the system. A central scheduling device may be a network device in the system, or may be a terminal device in the system.

According to a sixth aspect, this application provides a computer-readable storage medium, configured to store instructions. When the instructions are run by a computer, the method in any one of the first aspect and the second aspect is implemented.

According to a seventh aspect, this application further provides a computer program product including instructions. When the computer program product runs on a computer, the method in any one of the first aspect and the second aspect is implemented.

According to an eighth aspect, this application provides a chip system. The chip system includes a processor and an interface. The interface is configured to obtain a program or instructions. The processor is configured to invoke the program or the instructions to implement or support a receiving device or a central scheduling device in implementing the functions in the first aspect, or implement or support a transmitting device in implementing the functions in the second aspect, for example, determining or processing at least one of data and information in the foregoing method. In a possible design, the chip system further includes a memory. The memory is configured to store program instructions and data that are necessary for a terminal. The chip system may include a chip, or may include a chip and another discrete component.

According to a ninth aspect, this application provides a communication apparatus, including a processor, configured to execute a computer program or executable instructions stored in a memory. When the computer program or the executable instructions are executed, the apparatus is enabled to perform the method in the possible implementations of any one of the first aspect and the second aspect.

In a possible implementation, the processor and the memory are integrated together.

In another possible implementation, the memory is located outside the communication apparatus.

For beneficial effect of the third aspect to the ninth aspect, refer to the beneficial effect of the first aspect and the second aspect. Details are not described herein again.

### BRIEF DESCRIPTION OF DRAWINGS

FIG. 1 is a diagram of a system architecture according to an embodiment of this application;
FIG. 2 is a diagram of contention-based resource configuration and transmission according to an embodiment of this application;
FIG. 3 is a diagram of centrally scheduled resource configuration and transmission according to an embodiment of this application;
FIG. 4 is a diagram of a time domain resource occupied by data transmission according to an embodiment of this application;
FIG. 5 is an interaction diagram of a communication method according to an embodiment of this application;
FIG. 6 is an interaction diagram of another communication method according to an embodiment of this application;
FIG. 7 is another diagram of contention-based resource configuration and transmission according to an embodiment of this application;
FIG. 8 is a diagram of a time domain resource occupied by a signal and/or a channel according to an embodiment of this application;
FIG. 9 is another diagram of centrally scheduled resource configuration and transmission according to an embodiment of this application;
FIG. 10 is another diagram of a time domain resource occupied by a signal and/or a channel according to an embodiment of this application;
FIG. 11 is an interaction diagram of another communication method according to an embodiment of this application;
FIG. 12 is a diagram of a multi-hop communication scenario according to an embodiment of this application;
FIG. 13 is an interaction diagram of another communication method according to an embodiment of this application;
FIG. 14 is a diagram of a structure of a communication apparatus according to an embodiment of this application; and
FIG. 15 is a diagram of a structure of another communication apparatus according to an embodiment of this application.

### DESCRIPTION OF EMBODIMENTS

The following clearly and completely describes the technical solutions in embodiments of this application with reference to accompanying drawings in embodiments of this application.

### I. Communication system

To better understand a communication method disclosed in embodiments of this application, the communication system to which embodiments of this application are applicable is described.

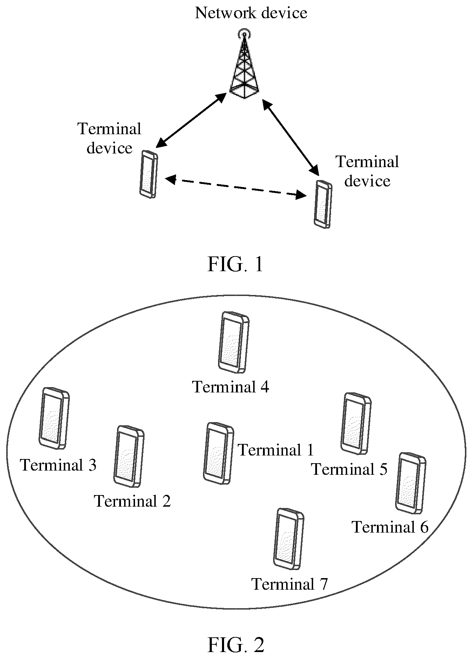

Embodiments of this application may be applied to a wireless communication system like a long term evolution (long term evolution, LTE) system, a 5th generation (5th generation, 5G) mobile communication system, an evolved system after 5G like a 6th generation (6th generation, 6G) mobile communication system, a satellite communication system, and a short-range system. A system architecture is shown in FIG. 1. The wireless communication system may include one or more network devices and one or more terminal devices. The wireless communication system may also perform point-to-point communication. For example, a plurality of terminal devices communicate with each other.

It may be understood that the wireless communication system mentioned in embodiments of this application includes but is not limited to a narrowband Internet of things (narrowband Internet of things, NB-IoT) system, a long term evolution (long term evolution, LTE) system, three application scenarios of a 5G/6G mobile communication system: enhanced mobile broadband (enhanced mobile broadband, eMBB), ultra-reliable low latency communication (ultra-reliable low latency communication, URLLC), and massive machine type communication (massive machine type communication, mMTC), a wireless fidelity (wireless fidelity, Wi-Fi) system, and the like.

In embodiments of this application, the network device is a device having a wireless transceiver function, is configured to communicate with the terminal device, and may be an evolved NodeB (evolved NodeB, eNB or eNodeB) in LTE, a base station in a 5G/6G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include various forms of base stations, for example, a macro base station, a micro base station (which is also referred to as a small cell), a relay station, an access point, a future device for implementing a function of a base station, an access point (access point, AP) in a Wi-Fi system, a transmitting and receiving point (transmitting and receiving point, TRP), a transmitting point (transmitting point, TP), a mobile switching center, a device, that implements a function of a base station, in device-to-device (device-to-device, D2D), vehicle-to-everything (vehicle-everything, V2X), and machine-to-machine (machine-to-machine, M2M) communication, a device, that implements a function of a base station, in an evolved communication system after 5G, an integrated access and backhaul (integrated access and backhaul, IAB), a central unit (centrallized unit, CU) and a distributed unit (distributed unit, DU) in a cloud access network (cloud radio access network, C-RAN) system, and a network device in a non-terrestrial network (non-terrestrial network, NTN) communication system, that is, may be deployed on a high-altitude platform or a satellite, and may further be various devices that form an access node, for example, an active antenna processing unit (active antenna unit, AAU) and a baseband unit (baseband unit, BBU). This is not specifically limited in embodiments of this application.

The network device may communicatively interact with a core network device, to provide a communication service for the terminal device. The core network device is, for example, a device in a 5G network core network (core network, CN). As a bearer network, the core network provides an interface for a data network, provides communication connection, authentication, management, and policy control for a terminal, bearers a data service, and the like.

The terminal device in embodiments of this application may include various devices with a wireless communication function, for example, a handheld device, a vehicle-mounted device, a wearable device, a computing device, or another processing device connected to a wireless modem. The terminal device may also be referred to as the terminal. The terminal device may alternatively be user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a smart point of sale (point of sale, POS), a customer-premises equipment (customer-premises equipment, CPE), a machine type communication (machine type communication, MTC) terminal, a communication device mounted on a high-altitude airplane, a wearable device, an uncrewed aerial vehicle, a robot, a terminal in D2D, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transport safety (transportation safety), a wireless terminal in a smart city (smart city), a wireless terminal in a smart home (smart home), a terminal device in a future communication network, or the like. This is not limited in this application.

In embodiments disclosed in this application, all aspects, embodiments, or features of this application are presented by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

### II. Related concepts

To better understand the communication method disclosed in embodiments of this application, related concepts in embodiments of this application are briefly described.

### 1. Contention-based resource configuration and transmission and centrally scheduled resource configuration and transmission

Contention-based resource configuration and transmission means that terminal devices obtain, in a contention-based manner, a transmission resource used for communication. For example, the terminals obtain the transmission resource based on a listen before talk (listen before talk, LBT) mechanism. In the LBT mechanism, a transmitting terminal listens to control information from another terminal, and obtains, based on the control information obtained through listening, a resource occupied by the another terminal to transmit a signal and/or a channel, to determine an unoccupied idle resource, and transmit a signal and/or a channel using the idle resource.

For example, as shown in FIG. 2, a terminal 1 listens to control information of a terminal 2 to a terminal 7 based on the LBT mechanism, and may obtain resources occupied by the terminal 2 to the terminal 7 to transmit signals and/or channels, to determine an unoccupied idle resource, and determine, from the idle resource, a transmission resource used by the terminal 1 to transmit a signal and/or a channel.

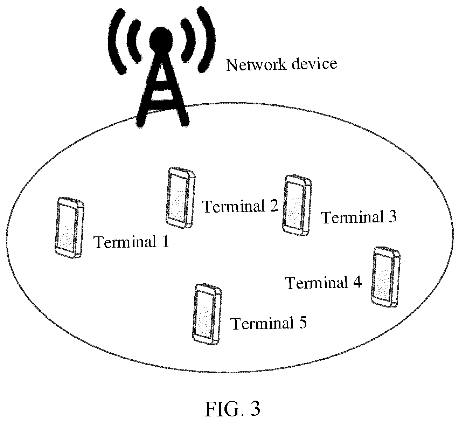

Centrally scheduled resource configuration and transmission means that a network device or a source node centrally schedules a resource on which transmission is performed for communication between terminals. The source node may be a network device or a terminal device. For example, as shown in FIG. 3, the network device configures, for the terminal 1 to a terminal 5, a transmission resource for communication between the terminals.

### 2. Automatic gain control (automatic gain control, AGC)

When a signal received by a receiving device is strong, a gain may be automatically reduced through AGC. When a signal received by the receiving device is weak, a gain may be increased through AGC to keep output signal power constant or within a specific range. Transmit devices whose distances from the receiving device differ greatly may cause received signals of the receiving device to fluctuate within a large range, and further cause near-far effect. Consequently, for signals and/or channels from different transmitting devices at adjacent sending time, the receiving device needs long time to adjust receive power, to receive a signal and/or a channel from each transmitting device at adaptive receive power.

The receiving device needs some time to perform the AGC operation. When subcarrier spacings of the signals received by the receiving device are different, time that the receiving device needs to perform the AGC operation on the signals is different. Typically, when the subcarrier spacing is 15 kHz, time that the receiving device needs to perform the AGC operation is less than or equal to 35 µs. When the subcarrier spacing is 30 kHz, time that the receiving device needs to perform the AGC operation is less than or equal to 18 µs. When the subcarrier spacing is 60 kHz, time that the receiving device needs to perform the AGC operation is less than or equal to 9 µs. It can be learned that a larger subcarrier spacing of the signal received by the receiving device indicates shorter time that the receiving device needs to perform the AGC operation.

Currently, to make preparations for the receiving device to perform the AGC operation, the transmitting device reserves a 1^{st} symbol of a sent signal and/or channel, that is, reserves the 1^{st} symbol for the receiving device to perform the AGC operation. In other words, when receiving the signal and/or the channel, the receiving device may perform the AGC operation using the 1^{st} symbol of the signal and/or the channel.

Different receiving devices have different performance, and accordingly different receiving devices may need different time to perform the AGC operation. Therefore, the time that the receiving device needs to perform the AGC operation may be less than one symbol. When the transmitting device includes a signal or a channel on a 2^{nd} symbol of the sent signal and/or channel, for example, includes a physical sidelink shared channel (physical sidelink share channel, PSSCH), a demodulation reference signal (demodulation reference signal, DMRS), a phase tracking reference signal (phase tracking reference signal, PTRS), a channel state information reference signal (channel state information reference signal, CSI-RS), or a physical sidelink control channel (physical sidelink control channel, PSCCH), the transmitting device also includes, on the 1^{st} symbol, the signal or the channel carried on the 2^{nd} symbol, that is, the signal or the channel carried on the 2^{nd} symbol is repeatedly sent on the 1^{st} symbol. In this case, when receiving the signal and/or the channel from the transmitting device, the receiving device performs the AGC operation using the 1^{st} symbol of the signal and/or the channel. If time required for performing the AGC operation is short, for example, less than a cyclic prefix (cyclic prefix, CP), a signal and/or a channel may continue to be received using the symbol, to successfully receive as many signals and/or channels as possible. For example, the channel is successfully decoded in advance or is received together with a subsequent channel and/or channel, so that reception performance can be improved.

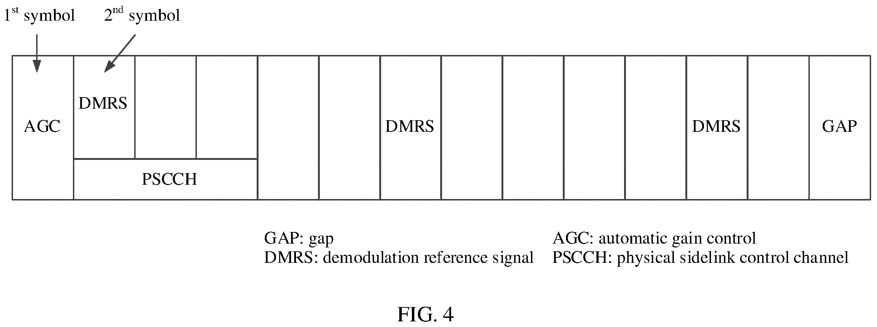

For example, FIG. 4 shows a time domain resource occupied by the signal and/or the channel sent by the transmitting device to the receiving device. As shown in FIG. 4, a 1^{st} symbol of the time domain resource is a resource reserved for the receiving device to perform the AGC operation, that is, the receiving device may perform the AGC operation on the 1^{st} symbol. A 2^{nd} symbol of the time domain resource carries a PSCCH and a DMRS. To improve receiving performance of the receiving device, the transmitting device also sends the DMRS and the PSCCH on the 1^{st} symbol, that is, repeatedly sends the DMRS and the PSCCH on the 1^{st} symbol. Therefore, after completing the AGC operation on the 1^{st} symbol, the receiving device may receive the DMRS and the PSCCH, to increase a probability of successfully receiving the DMRS and the PSCCH. In addition, the second symbol may also include a physical downlink shared channel (physical downlink shared channel, PDSCH), and correspondingly, the first symbol includes a repetition of the PDSCH.

Optionally, the transmitting device may further puncture a symbol used to send the signal and/or the channel to the receiving device, so that the symbol is used by the receiving device to perform the AGC operation. However, this manner deteriorates receiving performance. For example, the transmitting device punctures the 1^{st} symbol occupied by the signal and/or the channel sent to the receiving device, so that the receiving device performs the AGC operation using the 1^{st} symbol occupied by the signal and/or the channel, and does not receive the signal and/or the channel using the 1^{st} symbol.

It can be learned that currently, when the transmitting device sends a signal and/or a channel to the receiving device, resource reservation is performed by default, for example, one symbol is reserved for the receiving device to perform the AGC operation. However, in this manner, when receiving a signal and/or a channel from each transmitting device, the receiving device performs the AGC operation using a 1^{st} symbol occupied by the signal and/or the channel. Consequently, the 1^{st} symbol resource is not available, and large resource overheads are caused.

Embodiments of this application may be applied to a sidelink (sidelink, SL) scenario in D2D communication and V2X communication. For example, embodiments of this application may be applied to uncrewed aerial vehicle/unmanned workshop communication, direct communication between machines in factories, and device communication in augmented reality, virtual reality, and extended reality.

A first transmitting device and one or more second transmitting devices in embodiments of this application may be understood as terminal devices capable of sending signals and/or channels to the receiving device, and the receiving device may be understood as a terminal device capable of receiving the signals and/or the channels from the first transmitting device and the one or more second transmitting devices.

When embodiments of this application are applied to contention-based resource configuration and transmission, a first device is a receiving device, the receiving device is a receiving terminal, and the one or more transmitting devices are transmitting terminals that send signals/channels to the receiving terminal.

When embodiments of this application are applied to centrally scheduled resource configuration and transmission, the first device is a central scheduling device, the receiving device is a receiving terminal, and the one or more transmitting devices are transmitting terminals that send signals and/or channels to the receiving terminal. The central scheduling device may be a network device, a terminal device, a source node, or a scheduling node that is separated from a source.

The signal in embodiments of this application includes but is not limited to a synchronization signal, a reference signal, a data signal, a control signal, and the like. The channel in embodiments of this application includes but is not limited to a data channel, a control channel, a PSSCH, a PSCCH, a physical uplink control channel (physical uplink control channel, PUCCH), a physical uplink shared channel (physical uplink shared channel, PUSCH), a physical downlink control channel (physical downlink control channel, PDCCH), a PDSCH, and the like.

### 3. Communication method 100

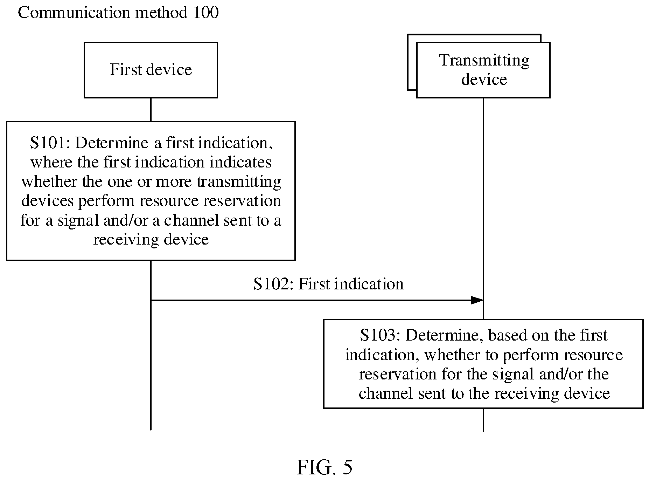

Embodiments of this application provide a communication method 100. FIG. 5 is an interaction diagram of the communication method 100. In the communication method 100, a first device indicates, based on a first indication to one or more transmitting devices, whether to perform resource reservation for a signal and/or a channel sent to a receiving device, so that when sending the signal and/or the channel to the receiving device, each of the one or more transmitting devices determines, based on the first indication, whether to perform resource reservation for the signal and/or the channel sent to the receiving device. The communication method 100 includes but is not limited to the following steps:

S101: The first device determines the first indication, where the first indication indicates whether the one or more transmitting devices perform resource reservation for the signal and/or the channel sent to the receiving device.

In a possible implementation, the resource reservation includes puncturing a symbol used to send a signal and/or a channel to the receiving device. For example, when sending the signal and/or the channel to the receiving device, the transmitting device punctures a 1^{st} symbol occupied by the signal and/or the channel to be sent to the receiving device. In other words, the transmitting device does not send the signal and/or the channel on the 1^{st} symbol occupied by the signal and/or the channel sent to the receiving device, so that the receiving device performs an AGC operation using the 1^{st} symbol.

In another possible implementation, the resource reservation includes repeatedly sending, on a symbol, a signal and/or a channel sent to the receiving device. For example, as shown in FIG. 4, the transmitting device repeatedly sends, on the 1^{st} symbol, the signal and/or the channel sent to the receiving device, so that after performing the AGC operation on the 1^{st} symbol, the receiving device may receive the signal and/or the channel from the transmitting device.

Therefore, when the transmitting device performs resource reservation for the signal and/or the channel sent to the receiving device, it means that when the receiving device receives the signal and/or the channel from the transmitting device, the reserved resource is used to perform the AGC operation, that is, the receiving device performs the AGC operation using a time domain resource occupied by the signal and/or the channel. Correspondingly, when the transmitting device does not perform resource reservation for the signal and/or the channel sent to the receiving device, it means that when receiving the signal and/or the channel from the transmitting device, the receiving device does not need to perform the AGC operation using the time domain resource occupied by the signal and/or the channel; or the receiving device may complete the AGC operation in short time such as a CP, and the receiving device receives the signal and/or the signal using the time domain resource occupied by the signal and/or the channel, to reduce resource overheads caused by the AGC operation.

In a possible implementation, when the first indication indicates the transmitting device to perform resource reservation for the signal and/or the channel sent to the receiving device, it may also be understood that the first indication indicates the transmitting device to enable (on) AGC reservation time. Correspondingly, when the first indication indicates the transmitting device not to perform resource reservation for the signal and/or the channel sent to the receiving device, it may also be understood that the first indication indicates the transmitting device to disable (off) the AGC reservation time.

In a possible implementation, the first device may further obtain, in advance, the time domain resource occupied by the signal and/or the channel sent by the one or more transmitting devices to the receiving device, and geographical location information of each of the one or more transmitting devices. The geographical location information may include a distance between the transmitting device and the receiving device, an angle between the transmitting device and the receiving device, and geographical location coordinates of the transmitting device. For example, the geographical location coordinates may be longitude, latitude, and a height of a relative location or an absolute location. For example, the angle between the transmitting device and the receiving device may be an angle of arrival (angle of arrival, AOA), a zenith angle of arrival (zenith angle of arrival, ZOA), or the like. Therefore, the receiving device may determine, based on a location of each of the one or more transmitting devices in a location range of the receiving device and a time domain resource occupied by the signal and/or the channel sent by each transmitting device to the receiving device, whether each transmitting device performs resource reservation for the signal and/or the channel sent to the receiving device, that is, determine the first indication.

For example, the first device groups transmitting devices that are geographically located in a same geographical location range of the receiving device into one group. For a plurality of transmitting devices in the group that send, to the receiving device, signals and/or channels occupying time domain resources being adjacent in time domain, the first device determines that a 1^{st} transmitting device that is earlier in time domain in the time domain resources occupied by the signals and/or the channels sent to the receiving device performs resource reservation for a signal and/or a channel sent to the receiving device; and determines that one or more transmitting devices that are later in time domain in the time domain resources occupied by the signals and/or the channels sent to the receiving device does not perform resource reservation for a signal and/or a channel sent to the receiving device. In other words, for the plurality of transmitting devices (namely, a plurality of transmitting devices belonging to a same group) that are located in a same geographical location range of the receiving device, the transmitting device that sends the signal and/or the channel to the receiving device at earliest sending time performs resource reservation for the signal and/or the channel sent to the receiving device, and the one or more transmitting devices that send the signal and/or the channel to the receiving device at later sending time do not perform resource reservation for the signal and/or the channel sent to the receiving device.

For example, the first device is a receiving terminal, and transmitting terminals that communicate with the receiving terminal include a transmitting terminal 1, a transmitting terminal 2, and a transmitting terminal 3. The receiving terminal obtains geographical location information of the transmitting terminal 1, the transmitting terminal 2, and the transmitting terminal 3, and time domain resources occupied by signals and/or channels separately sent by the transmitting terminal 1, the transmitting terminal 2, and the transmitting terminal 3 to the receiving terminal. The receiving terminal learns that the transmitting terminal 1 and the transmitting terminal 3 are in a same geographical location range of the receiving terminal, and a time domain resource occupied by a signal and/or a channel sent by the transmitting terminal 1 to the receiving terminal is adjacent to a time domain resource occupied by a signal and/or a channel sent by the transmitting terminal 3 to the receiving terminal in time domain. In this case, when the receiving terminal determines to separately receive the signals and/or channels from the transmitting terminal 1 and the transmitting terminal 3, receive power of the received signals and/or channels fluctuates within a small range. Therefore, the receiving terminal determines that the transmitting terminal 1 whose sending time is earlier performs resource reservation for the signal and/or the channel sent to the receiving terminal, and the transmitting terminal 3 whose sending time is later does not perform resource reservation for the signal and/or the channel sent to the receiving terminal. The transmitting terminal 2 does not belong to a same geographical location range of the receiving terminal as the transmitting terminal 1 and the transmitting terminal 3, and the receiving terminal determines that the transmitting terminal 2 performs resource reservation for a signal and/or a channel sent to the receiving terminal.

Therefore, when receiving signals and/or channels from the transmitting terminal 1 and the transmitting terminal 2, the receiving terminal needs to perform an AGC operation using a reserved resource. When receiving the signal and/or the channel from the transmitting terminal 3, the receiving terminal does not need to perform the AGC operation using a reserved resource, to reduce resource overheads caused by the AGC operation.

Optionally, the first device obtains the time domain resource occupied by the signal and/or the channel sent by the one or more transmitting devices to the receiving device, and a transmission delay/transmission time at which each transmitting device sends the signal and/or the channel to the receiving device. The first device may determine, based on the transmission delay/transmission time at which each transmitting device sends the signal and/or the channel to the receiving device, a location of each transmitting device in a geographical location range of the receiving device, and further determine, based on the time domain resource occupied by the signal and/or the channel sent by the one or more transmitting devices to the receiving device and the location of each transmitting device in the geographical location range of the receiving device, whether each of the one or more transmitting devices performs resource reservation for the signal and/or the channel sent to the receiving device.

Optionally, the first device may further determine, based on the time domain resource occupied by the signal and/or the channel sent by the one or more transmitting devices to the receiving device and a range to which the transmission delay/transmission time at which each transmitting device sends the signal and/or the channel to the receiving device belongs, whether each of the one or more transmitting devices performs resource reservation for the signal and/or the channel sent to the receiving device.

For example, the first device is a receiving terminal, and transmitting terminals that communicate with the receiving terminal include a transmitting terminal 1, a transmitting terminal 2, and a transmitting terminal 3. The transmitting terminal obtains a transmission delay generated when the transmitting terminal 1, the transmitting terminal 2, and the transmitting terminal 3 send signals and/or channels to the receiving terminal, and time domain resources occupied by the signals and/or the channels separately sent by the transmitting terminal 1, the transmitting terminal 2, and the transmitting terminal 3 to the receiving terminal. The receiving terminal learns that transmission delays generated when the transmitting terminal 1 and the transmitting terminal 2 send signals and/or channels to the receiving terminal fall within a same transmission delay range, and a time domain resource occupied by a signal and/or a channel sent by the transmitting terminal 1 to the receiving terminal is adjacent to a time domain resource occupied by a signal and/or a channel sent by the transmitting terminal 2 to the receiving terminal in time domain. Therefore, the receiving terminal determines that the transmitting terminal 1 whose sending time is earlier performs resource reservation for the signal and/or the channel sent to the receiving terminal, and the transmitting terminal 2 whose sending time is later does not perform resource reservation for the signal and/or the channel sent to the receiving terminal. A transmission delay generated when the transmitting terminal 3 sends a signal and/or a channel to the receiving terminal does not belong to a same transmission delay range as the transmission delays generated when the transmitting terminal 1 and the transmitting terminal 2 send the signals and/or the channels to the receiving terminal. Therefore, the receiving terminal determines that the transmitting terminal 3 performs resource reservation for the signal and/or the channel sent to the receiving terminal.

In another possible implementation, the first device may obtain the time domain resource occupied by the signal and/or the channel sent by the one or more transmitting devices to the receiving device, and signal strength or a signal strength range of a signal and/or a channel received by the receiving device from each of the one or more transmitting devices when each transmitting device sends the signal and/or the channel to the receiving device. Then, the first device determines, based on the time domain resource occupied by the signal and/or the channel sent by the one or more transmitting devices to the receiving device and the signal strength or the signal strength range of a signal and/or a channel received by the receiving device from each transmitting device, whether each of the one or more transmitting devices performs resource reservation for the signal and/or the channel sent to the receiving device.

For an implementation in which the first device determines, based on the time domain resource occupied by the signal and/or the channel sent by the one or more transmitting devices to the receiving device and the signal strength or the signal strength range of a signal and/or a channel received by the receiving device from each transmitting device, whether each of the one or more transmitting devices performs resource reservation for the signal and/or the channel sent to the receiving device, refer to the foregoing implementation in which the first device determines, based on the time domain resource occupied by the signal and/or the channel sent by the one or more transmitting devices to the receiving device and the geographical location range of the receiving device in which each transmitting device is located, whether each of the one or more transmitting devices performs resource reservation for the signal and/or the channel sent to the receiving device. Details are not described herein.

It can be learned that the first device may determine that a part of the one or more transmitting devices performs resource reservation for the signal and/or the channel sent to the receiving device, and may also determine that a part of the one or more transmitting devices do not perform resource reservation for the signal and/or the channel sent to the receiving device. Therefore, when receiving the signal and/or the channel from the one or more transmitting devices, the receiving device performs the AGC operation for some transmitting devices that configure a reserved resource, and may perform the AGC operation for remaining transmitting devices that do not configure a reserved resource. This helps reduce resource overheads caused by reserved resource configuration to perform the AGC operation by the receiving device.

Optionally, when the first indication indicates whether one transmitting device performs resource reservation for a signal and/or a channel sent to the receiving device, the first device may determine a plurality of first indications, and each first indication corresponds to one transmitting device. In other words, the first device may determine the first indication of each of the plurality of transmitting devices, and each first indication indicates whether the transmitting device performs resource reservation for the signal and/or the channel sent to the receiving device. For an implementation in which the first device determines whether each of the plurality of transmitting devices performs resource reservation for the signal and/or the channel sent to the receiving device, refer to the foregoing descriptions. Details are not described again.

It may be understood that the first device may indicate, using a 1-bit bit value in the first indication, whether to perform resource reservation for the signal and/or the channel sent to the receiving device. For example, when the bit value in the first indication that indicates whether to perform resource reservation for the signal and/or the channel sent to the receiving device is 1, it indicates to perform resource reservation for the signal and/or the channel sent to the receiving device. When the bit value in the first indication that indicates whether to perform resource reservation for the signal and/or the channel sent to the receiving device is 0, it indicates not to perform resource reservation for the signal and/or the channel sent to the receiving device. When the first device sends the first indication in a multicast manner or in a multi-cast manner, each transmitting device may determine, based on a location of the first indication in an indication bit sequence sent by the first device, a resource reservation indication of the transmitting device. In this manner, the transmitting device determines, based on the bit value in the first indication, whether to perform resource reservation for the signal and/or the channel sent to the receiving device. In addition, this manner can also reduce signaling overheads.

Optionally, when the first indication indicates whether the plurality of transmitting devices perform resource reservation for signals and/or channels sent to the receiving device, the first indication may further include an identifier of each of the plurality of transmitting devices, and there is an association relationship between the identifier of each transmitting device and whether the transmitting device performs resource reservation for a signal and/or a channel sent to the receiving device. In this manner, each of the plurality of transmitting devices determines, based on the identifier of the transmitting device from the first indication, whether to perform resource reservation for the signal and/or the channel sent to the receiving device.

Optionally, when the first indication indicates some of the plurality of transmitting devices to perform resource reservation for signals and/or channels sent to the receiving device, the first indication may further include identifiers of the some transmitting devices. Correspondingly, when the first indication indicates the other transmitting devices in the plurality of transmitting devices not to perform resource reservation for signals and/or channels sent to the receiving device, the first indication does not include identifiers of the other transmitting devices. Therefore, each transmitting device may determine, based on whether an identifier of the transmitting device is included in the first indication, whether to perform resource reservation for the signal and/or the channel sent to the receiving device. This manner can reduce signaling overheads.

S102: The first device sends the first indication to the one or more transmitting devices. Correspondingly, each of the one or more transmitting devices receives the first indication.

It may be understood that when the first indication indicates whether the plurality of transmitting devices perform resource reservation for the signals and/or the channels sent to the receiving device, the first device may send the first indication to the plurality of transmitting devices in the multicast manner.

Optionally, when the first indication indicates whether one transmitting device performs resource reservation for a signal and/or a channel sent to the receiving device, the first device determines a plurality of first indications. Therefore, the first device may send, to each of the plurality of transmitting devices in a unicast manner, a first indication of the transmitting device.

S103: The transmitting device determines, based on the first indication, whether to perform resource reservation for the signal and/or the channel sent to the receiving device.

It may be understood that the transmitting device is any one of the one or more transmitting devices.

When the first indication indicates whether the plurality of transmitting devices perform resource reservation for the signals and/or the channels sent to the receiving device, the transmitting device may determine, based on the identifier of the transmitting device from the first indication, whether to perform resource reservation for the signal and/or the channel sent to the receiving device.

When the first indication received by the transmitting device indicates whether the transmitting device performs resource reservation for the signal and/or the channel sent to the receiving device, the transmitting device may learn, based on the first indication, whether to perform resource reservation for the signal and/or the channel sent to the receiving device.

In a possible implementation, when determining whether to perform resource reservation for the signal and/or the channel sent to the receiving device, the transmitting device punctures a symbol used to send the signal and/or the channel to the receiving device. Correspondingly, when receiving the signal and/or the channel from the transmitting device, the receiving device performs the AGC operation using the reserved resource, and punctures a symbol used to receive the signal and/or the channel from the transmitting device.

Optionally, when determining to perform resource reservation for the signal and/or the channel sent to the receiving device, the transmitting device repeatedly sends, on a symbol, the signal and/or the channel sent to the receiving device. Correspondingly, when receiving the signal and/or the channel from the transmitting device, the receiving device performs the AGC operation using the reserved resource, and receives the signal and/or the channel from the transmitting device after the AGC operation is completed.

Optionally, when determining not to perform resource reservation for the signal and/or the channel sent to the receiving device, the transmitting device sends the signal and/or the channel to the receiving device based on the time domain resource occupied by the signal and/or the channel sent to the receiving device. Correspondingly, when receiving the signal and/or the channel from the transmitting device, the receiving device does not need to perform the AGC operation using the reserved resource, and receives the signal and/or the channel based on the time domain resource occupied by the signal and/or the channel sent by the transmitting device, to reduce resource overheads caused by the AGC operation.

In embodiments of this application, the first device indicates, to the one or more transmitting devices, whether to perform resource reservation for the signal and/or the channel sent to the receiving device, so that when sending the signal and/or the channel to the receiving device, each of the one or more transmitting devices determines, based on the first indication, whether to perform resource reservation for the signal and/or the channel sent to the receiving device, instead of performing resource reservation by default. Further, when receiving the signal and/or the channel from each of the one or more transmitting devices, the receive device does not need to perform the AGC operation using the reserved resource by default. This helps reduce resource overheads caused by the AGC operation.

### 4. Communication method 200

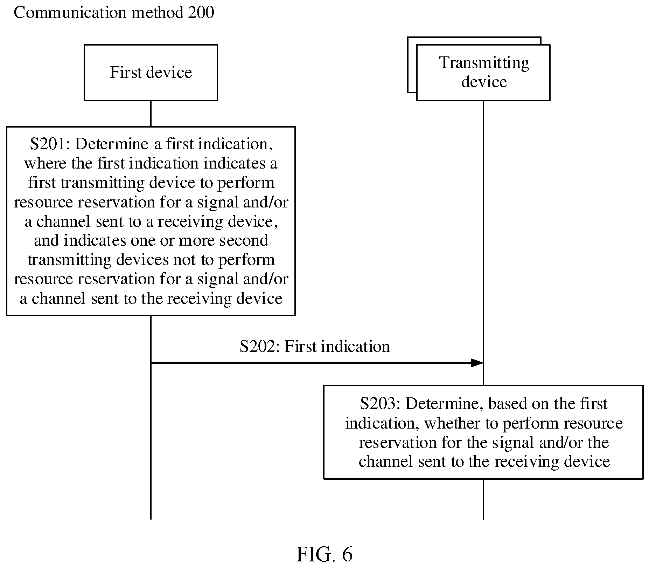

Embodiments of this application further provide a communication method 200. FIG. 6 is an interaction diagram of the communication method 200. In the communication method 200, a first device indicates, based on a first indication, a first transmitting device in one or more transmitting devices to perform resource reservation for a signal and/or a channel sent to a receiving device, and indicates, based on the first indication, one or more second transmitting devices whose sending time is later than sending time of the first transmitting device and that are in the one or more transmitting devices not to perform resource reservation for a signal and/or a channel sent to the receiving device. The communication method 200 includes but is not limited to the following steps:

S201: The first device determines the first indication, where the first indication indicates the first transmitting device to perform resource reservation for the signal and/or the channel sent to the receiving device, and indicates the one or more second transmitting devices not to perform resource reservation for the signal and/or the channel sent to the receiving device.

It may be understood that the receiving device is a receiving terminal, the first transmitting device may be understood as a first transmitting terminal, and the second transmitting device may be understood as a second transmitting terminal. Both the first transmitting terminal and the one or more second transmitting terminals are transmitting terminals for the receiving terminal, that is, both the first transmitting terminal and the one or more transmitting terminals are transmitting terminals that send signals and/or channels to the receiving terminal. In this case, the receiving terminal or a central scheduling device indicates the first transmitting terminal to perform resource reservation for the signal and/or the channel sent to the receiving terminal, and configures, for the one or more second transmitting terminals, that resource reservation is not performed for the signal and/or the channel sent to the receiving terminal.

A time domain resource occupied by the signal and/or the channel sent by the one or more second transmitting devices to the receiving device is located after a time domain resource occupied by the signal and/or the channel sent by the first transmitting device to the receiving device. It may also be understood that time at which the one or more second transmitting devices send the signal and/or the channel to the receiving device is later than time at which the first transmitting device sends the signal and/or the channel to the receiving device.

In this manner, the first device may further pre-obtain time domain resources occupied by signals and/or channels sent by the plurality of transmitting devices to the receiving device, to determine the first indication based on time domain resources occupied by signals and/or channels sent by the first transmitting device and the one or more second transmitting devices to the receiving device. For example, the receiving device obtains, based on periodicity reservation information or higher layer signaling information of sidelink control information (sidelink control information, SCI), time domain resources occupied by periodic signals and/or periodic channels that are sent by the plurality of transmitting devices to the receiving device.

In addition, for an implementation of resource reservation, refer to the descriptions in the communication method 100. Details are not described again.

In a possible implementation, both the first transmitting device and the one or more second transmitting devices are located in a first geographical location range of the receiving device or a first transmission delay/first transmission time range. In this manner, when the receiving device receives the signals and/or the channels from the first transmitting device and the one or more second transmitting devices, power at which the signals and/or the channels are received fluctuates within a small range, for example, the power fluctuates within a preset range. In this case, the receiving device may perform, on the reserved resource, an AGC operation on the signal and/or the channel from the first transmitting device, and the receiving device may not need to perform the AGC operation using the reserved resource when subsequently receiving the signal and/or the channel from the one or more second transmitting devices.

Therefore, the first device indicates the first transmitting device to perform resource reservation for the signal and/or the channel sent to the receiving device, and indicates the one or more second transmitting devices not to perform resource reservation for the signal and/or the channel sent to the receiving device. In this manner, when the receiving device receives the signal and/or the channel from the one or more second transmitting devices, the AGC operation does not need to be performed using the reserved resource, so that resource overheads caused by the AGC operation can be reduced.

In this implementation, the first device may pre-obtain geographical locations of the plurality of transmitting devices that communicate with the receiving device. The first device groups the plurality of transmitting devices based on the geographical locations of the plurality of transmitting devices that communicate with the receiving device, and groups, into a same group, one or more transmitting devices whose distances from the receiving device are in a same geographical location range of the receiving device. Alternatively, the first device groups one or more transmitting devices that belong to a same pre-configured geographical location range into a same group. The pre-configured geographical location range is preset. In this manner, when the receiving device receives signals and/or channels from transmitting devices in each group, receive power at which the signals and/or the channels are received by the receiving device fluctuates within a small range.

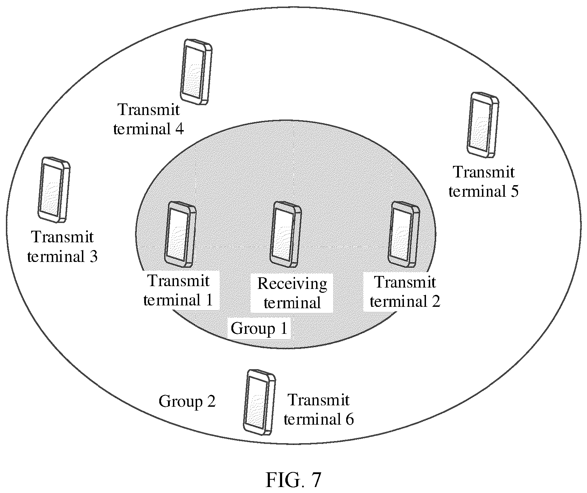

For example, in a contention-based resource configuration and transmission scenario shown in FIG. 7, the first device is a receiving terminal. Transmit terminals that communicate with the receiving terminal includes a transmitting terminal 1 to a transmitting terminal 6, the transmitting terminal 1 and a transmitting terminal 2 are located in a same geographical location range of the receiving terminal, and a transmitting terminal 3, a transmitting terminal 4, a transmitting terminal 5, and the transmitting terminal 6 are located in another geographical location range of the receiving terminal. Therefore, the receiving terminal groups the transmitting terminal 1 and the transmitting terminal 2 into a group 1, and groups the transmitting terminal 3, the transmitting terminal 4, the transmitting terminal 5, and the transmitting terminal 6 into a group 2. The first transmitting terminal and the one or more second transmitting terminals are some or all transmitting terminals in the group 1 or the group 2. For example, the first transmitting terminal is the transmitting terminal 3, and the one or more second transmitting terminals include the transmitting terminal 4, the transmitting terminal 5, and the transmitting terminal 6.

Therefore, the receiving terminal may indicate the first transmitting terminals in the group 1 and the group 2 to perform resource reservation for the signal and/or the channel sent to the receiving terminal, and indicate the second transmitting terminals in the group 1 and the group 2 not to perform resource reservation for the signal and/or the channel sent to the receiving terminal.

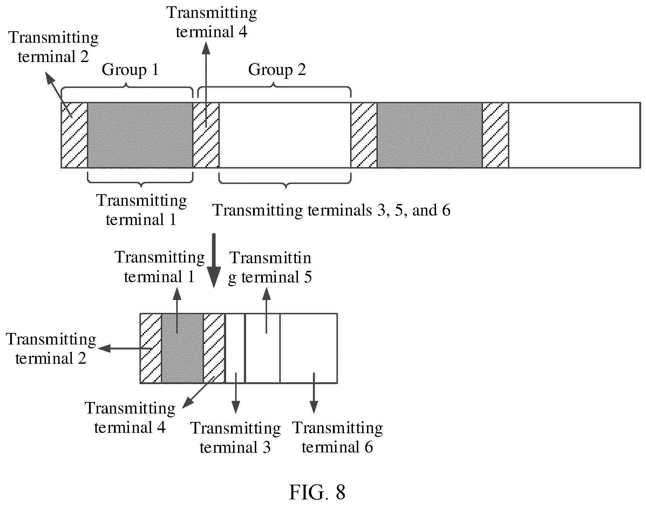

For example, each transmitting terminal periodically sends a signal and/or a channel to the receiving terminal. For time domain resources occupied by signals and/or channels periodically sent by the transmitting terminals in the group 1 and the group 2 to the receiving terminal in FIG. 7, refer to FIG. 8. As shown in FIG. 8, an area filled with slashes in the group 1 represents a time domain resource occupied by a signal and/or a channel periodically sent by the transmitting terminal 2 to the receiving terminal, an area filled with slashes in the group 2 represents a time domain resource occupied by a signal and/or a channel periodically sent by the transmitting terminal 4 to the receiving terminal, a black area in the group 1 represents a time domain resource occupied by a signal and/or a channel periodically sent by the transmitting terminal 1 to the receiving terminal, and a blank area in the group 2 represents a time domain resource occupied by signals and/or channels periodically sent by the transmitting terminal 3, the transmitting terminal 5, and the transmitting terminal 6 to the receiving terminal.

It can be seen from FIG. 8 that the time domain resource occupied by the signal and/or the channel periodically sent by the transmitting terminal 2 to the receiving terminal is located before the time domain resource occupied by the signal and/or the channel periodically sent by the transmitting terminal 1 to the receiving terminal; and the time domain resource occupied by the signal and/or the channel periodically sent by the transmitting terminal 4 to the receiving terminal is located before the time domain resource occupied by the signals and/or the channels periodically sent by the transmitting terminal 3, the transmitting terminal 5, and the transmitting terminal 6 to the receiving terminal. Therefore, a network device may indicate, based on the first indication, the transmitting terminal 2 in the group 1 and the transmitting terminal 4 in the group 2 to perform resource reservation for the signals and/or the channels sent to the receiving terminal; and indicate, based on the first indication, the transmitting terminal 1 in the group 1 and the transmitting terminal 3, the transmitting terminal 5, and the transmitting terminal 6 in the group 2 not to perform resource reservation for the signals and/or the channels sent to the receiving terminal.

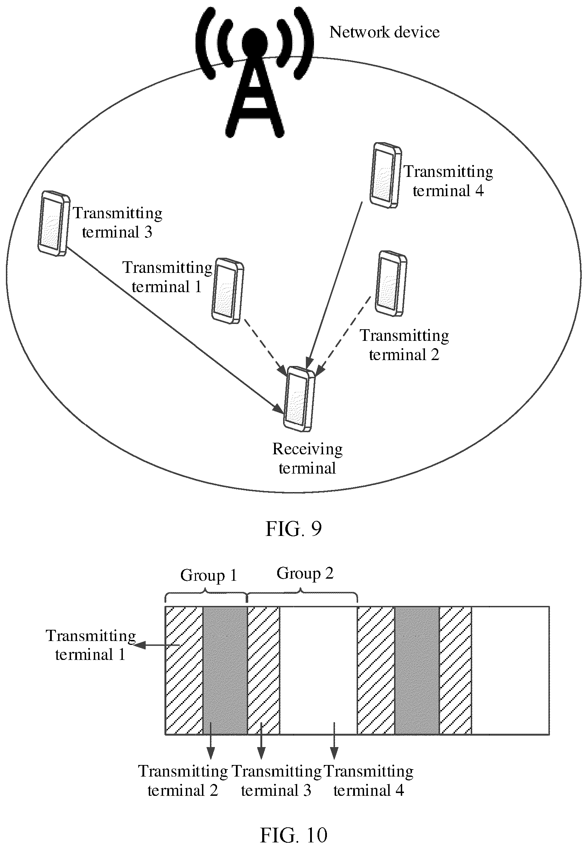

For example, in a centrally scheduled resource configuration and transmission scenario shown in FIG. 9, the first device is a network device. Transmit terminals that communicate with the receiving terminal include a transmitting terminal 1 to a transmitting terminal 4. The network device determines, based on a geographical location of the receiving terminal and a geographical location of each of the transmitting terminal 1 to the transmitting terminal 4, that the transmitting terminal 1 and the transmitting terminal 2 are in a geographical location range 1 of the receiving terminal, and that the transmitting terminal 3 and the transmitting terminal 4 are in a geographical location range 2 of the receiving terminal. The network device groups the transmitting terminal 1 and the transmitting terminal 2 into a group 1, and groups the transmitting terminal 3 and the transmitting terminal 4 into a group 2.

For example, each transmitting terminal periodically sends a signal and/or a channel to the receiving terminal. For time domain resources occupied by signals and/or channels sent by the transmitting terminals in the group 1 and the group 2 to the receiving terminal in FIG. 9, refer to FIG. 10. As shown in FIG. 10, an area filled with slashes in the group 1 represents a time domain resource occupied by a signal and/or a channel periodically sent by the transmitting terminal 1 to the receiving terminal, an area filled with slashes in the group 2 represents a time domain resource occupied by a signal and/or a channel periodically sent by the transmitting terminal 3 to the receiving terminal, a black area in the group 1 represents a time domain resource occupied by a signal and/or a channel periodically sent by the transmitting terminal 2 to the receiving terminal, and a blank area in the group 2 represents a time domain resource occupied by a signal and/or a channel periodically sent by the transmitting terminal 4 to the receiving terminal.

It can be seen from FIG. 10 that the time domain resource occupied by the signal and/or the channel periodically sent by the transmitting terminal 1 to the receiving terminal is located before the time domain resource occupied by the signal and/or the channel periodically sent by the transmitting terminal 2 to the receiving terminal; and the time domain resource occupied by the signal and/or the channel periodically sent by the transmitting terminal 3 to the receiving terminal is located before the time domain resource occupied by the signal and/or the channel periodically sent by the transmitting terminal 4 to the receiving terminal. Therefore, the network device may indicate, based on the first indication, the transmitting terminal 1 in the group 1 and the transmitting terminal 3 in the group 2 to perform resource reservation for the signals and/or the channels sent to the receiving terminal, and indicate, based on the first indication, the transmitting terminal 2 in the group 1 and the transmitting terminal 4 in the group 2 not to perform resource reservation for the signals and/or the channels sent to the receiving terminal.

Optionally, the first device may further pre-obtain transmission delays between the receiving device and the plurality of transmitting devices that communicate with the receiving device. The transmission delay is time for which receiving of a signal and/or a channel by the receiving device is delayed with reference to sending time at which the transmitting device sends the signal and/or the channel to the receiving device. Optionally, the transmission delay may also be understood as transmission time.

After obtaining the transmission delays between the receiving device and the plurality of transmitting devices that communicate with the receiving device, the first device determines one or more transmitting devices whose transmission delays/transmission time belong/belongs to a same range as one group. Then, the first device determines the first transmitting device and the one or more second transmitting devices from the group based on a time domain resource occupied by a signal and/or a channel sent by each transmitting device in the group to the receiving device.

For example, the plurality of transmitting terminals that communicate with the receiving terminal include the transmitting terminal 1, the transmitting terminal 2, the transmitting terminal 3, the transmitting terminal 4, and the transmitting terminal 5. Transmission delays between the transmitting terminal 1 and the receiving terminal and between the transmitting terminal 4 and the receiving terminal are within a transmission delay range 1, and transmission delays between the transmitting terminal 2 and the receiving terminal, between the transmitting terminal 3 and the receiving terminal, and between the transmitting terminal 5 and the receiving terminal are within a transmission delay range 2. The receiving terminal groups the transmitting terminal 1 and the transmitting terminal 4 into a group 1, and groups the transmitting terminal 2, the transmitting terminal 3, and the transmitting terminal 5 into a group 2. The first transmitting terminal and the one or more second transmitting terminals are some or all transmitting terminals in the group 1 or the group 2.

Optionally, after obtaining the transmission delays or the transmission time between the receiving device and the plurality of transmitting devices that communicate with the receiving device, the first device determines, based on a transmission delay or transmission time when each of the plurality of transmitting devices sends a signal and/or a channel to the receiving device, that a location of each transmitting device in a geographical location range of the receiving device, and then groups the plurality of transmitting devices based on the location of each transmitting device in the geographical location range of the receiving device.

In another possible implementation, when the first transmitting device and the one or more second transmitting devices send signals and/or channels to the receiving device, signal strength of the signals and/or the channels received by the receiving device falls within a first signal strength range. In this manner, when the receiving device receives the signals and/or the channels from the first transmitting device and the one or more second transmitting devices, receive power of the receiving device fluctuates within a small range. Therefore, the first device determines that the first transmitting device performs resource reservation for the signal and/or the channel sent to the receiving device, and the one or more second transmitting devices do not perform resource reservation for the signal and/or the channel sent to the receiving device.

In this implementation, the first device may group the plurality of transmitting devices based on a signal strength range to which signal strength of the signal and/or the channel received by the receiving device belongs when each of the plurality of transmitting devices sends the signal and/or the channel to the receiving device. The first device groups, into one group, corresponding transmitting devices whose signals and/or channels received by the receiving device have signal strength that belongs to a same signal strength range or a preset signal strength range.

For example, the first device is a receiving terminal, and transmitting terminals that communicate with the receiving terminal include the transmitting terminal 1, the transmitting terminal 2, the transmitting terminal 3, and the transmitting terminal 4. Signal strength of signals and/or channels received by the receiving terminal from the transmitting terminal 1 and the transmitting terminal 4 belongs to a signal strength range 1, and signal strength of signals and/or channels received by the receiving terminal from the transmitting terminal 2 and the transmitting terminal 3 belongs to a signal strength range 2. The receiving terminal groups the transmitting terminal 1 and the transmitting terminal 4 into a group 1, and groups the transmitting terminal 2 and the transmitting terminal 3 into a group 2.

In embodiments of this application, the preset geographical location range, the preset signal strength range, the preset transmission delay range, or the preset transmission time range is related to an AGC processing capability of the receiving device. For example, no additional symbol needs to be added to AGC processing time, of the receiving device, corresponding to the preset geographical location range, the preset signal strength range, the preset transmission delay range, or the transmission time range. For example, the receiving device may complete the AGC operation in a current CP range, to reduce resource overheads caused by the AGC operation.

After grouping the plurality of transmitting devices that communicate with the receiving device, the first device determines, based on the time domain resource occupied by the signal and/or the channel sent by the transmitting device in each group to the receiving device, the first transmitting device and the one or more second transmitting devices in the group, and then indicates the first transmitting device to perform resource reservation for the signal and/or the channel sent to the receiving device, and indicates the one or more second transmitting devices not to perform resource reservation for the signal and/or the channel sent to the receiving device.

In a possible implementation, time domain resources occupied by the signals and/or the channels sent by the first transmitting device and the one or more second transmitting devices to the receiving device are consecutive in time domain.

It may be understood that when the time domain resources occupied by the signals and/or the channels sent by the first transmitting device and the one or more second transmitting devices to the receiving device are consecutive in time domain, the receiving device does not receive a signal and/or a channel from another transmitting device in a process of receiving the signals and/or the channels from the first transmitting device and the one or more second transmitting devices. In addition, receive power at which the signal and/or the channel are/is received from the first transmitting device and the one or more second transmitting devices fluctuates within a small range, so that the first device may indicate the first transmitting device to perform resource reservation for the signal and/or the channel sent to the receiving device, and indicate the one or more second transmitting devices not to perform resource reservation for the signal and/or the channel sent to the receiving device. Therefore, when receiving the signal and/or the channel from the one or more second transmitting devices, the receiving device does not need to perform the AGC operation using the reserved resource, to reduce resource overheads caused by the AGC operation.

Optionally, time domain resources occupied by the signals and/or the channels sent by the first transmitting device and the one or more second transmitting devices to the receiving device are inconsecutive in time domain, and no third transmitting device sends a signal and/or a channel to the receiving device between the time domain resources occupied by the signals and/or the channels sent by the first transmitting device and the one or more second transmitting devices to the receiving device.

The third transmitting device is a transmitting device located outside the first geographical location range of the receiving device or the first transmission delay/first transmission time range, and/or a transmitting device that sends a signal and/or a channel to the receiving device, where signal strength of the signal and/or the channel received by the receiving device is outside the first signal strength range. It may also be understood that the third transmitting device is a transmitting device that is in a different group from the first transmitting device and the one or more second transmitting devices.

It may be understood that, when the time domain resources occupied by the signals and/or the channels sent by the first transmitting device and the one or more second transmitting devices to the receiving device are inconsecutive in time domain, no third transmitting device outside the group performs sending for the receiving device in the time domain resource range occupied by the signals and/or the channels sent by the first transmitting device and the one or more second transmitting devices to the receiving device. Therefore, although the time domain resources occupied by the signals and/or the channels sent by the first transmitting device and the one or more second transmitting devices to the receiving device are inconsecutive in time domain, the first device may still indicate the first transmitting device to perform resource reservation for the signal and/or the channel sent to the receiving device, and indicate the one or more second transmitting devices not to perform resource reservation for the signal and/or the channel sent to the receiving device. This helps reduce resource overheads caused by the AGC operation.

In a possible implementation, the first device may further send a third indication, where the third indication indicates one or more fourth transmitting devices to adjust, to a first time domain resource, a time domain resource occupied by a signal and/or a channel sent by the one or more fourth transmitting devices to the receiving device. The fourth transmitting device is a transmitting device located in the first geographical location range or the first transmission delay/first transmission time range, and/or a transmitting device that sends a signal and/or a channel to the receiving device, where signal strength of the signal received by the receiving device falls within the first signal strength range. The fourth transmitting device includes the first transmitting device and/or the one or more second transmitting devices.

When the fourth transmitting device is the first transmitting device and/or the one or more second transmitting devices, before determining the first indication, the first device sends the third indication. The third indication indicates the first transmitting device and/or the one or more second transmitting devices to adjust, to a first time domain resource, a time domain resource occupied by signals and/or channels sent by the first transmitting device and/or the one or more second transmitting devices to the receiving device.

The third indication may enable the time domain resources occupied by the signals and/or the channels sent by the first transmitting device and the one or more second transmitting devices to the receiving device to be consecutive in time domain; or may enable time domain resources occupied by the signals and/or the channels sent by the first transmitting device and the one or more second transmitting devices to the receiving device to be inconsecutive in time domain. However, no other transmitting device sends a signal and/or a channel to the receiving device in the time domain resource range occupied by the signals and/or the channels sent by the first transmitting device and the one or more second transmitting devices to the receiving device. Further, the first device indicates the first transmitting device to perform resource reservation for the signal and/or the channel sent to the receiving device, and indicates the one or more second transmitting devices not to perform resource reservation for the signal and/or the channel sent to the receiving device.

When the fourth transmitting device is a transmitting device located in the first geographical location range or the first transmission delay/first transmission time range other than the first transmitting device and the one or more second transmitting devices, and/or a transmitting device that sends a signal and/or a channel to the receiving device other than the first transmitting device and the one or more second transmitting devices, where signal strength of the signal received by the receiving device falls within the first signal strength range, the first device may send the third indication to the fourth device, so that the fourth device adjusts, to the first time domain resource, the time domain resource occupied by the signal and/or the channel sent to the receiving device. In this manner, the first device may further indicate the fourth transmitting device not to perform resource reservation for the signal and/or the channel sent to the receiving device, to reduce resource overheads caused by the AGC operation performed by the receiving device.

In a possible implementation, the first indication further includes the first transmitting device, a resource reservation indication corresponding to an identifier of the first transmitting device, an identifier of each of the one or more second transmitting devices, and a resource reservation indication corresponding to the identifier of each of the one or more second transmitting devices. The resource reservation indication corresponding to the identifier of the first transmitting device indicates to perform resource reservation for the signal and/or the channel sent to the receiving device, and the resource reservation indication corresponding to the identifier of each of the one or more second transmitting devices indicates not to perform resource reservation for the signal and/or the channel sent to the receiving device. In this manner, each of the first transmitting device and the one or more second transmitting devices may determine, based on the first indication, whether the transmitting device performs resource reservation for the signal and/or the channel sent to the receiving device.

In a possible implementation, that the transmitting device determines the first indication includes: The transmitting device determines a first indication of the first transmitting device and a first indication of the one or more second transmitting devices. The first indication of the first transmitting device indicates to perform resource reservation for the signal and/or the channel sent to the receiving device, and the first indication of the one or more second transmitting devices indicates not to perform resource reservation for the signal and/or the channel sent to the receiving device.

In a possible implementation, the first device indicates, based on a 1-bit bit value in the first indication, whether to perform resource reservation for the signal and/or the channel sent to the receiving device. For a specific implementation, refer to the descriptions in the communication method 100. Details are not described again.

S202: The first device sends the first indication. Correspondingly, the transmitting device receives the first indication.

The transmitting device may be the first transmitting device, or may be any one of the one or more second transmitting devices.

It may be understood that the first device may send the first indication to the first transmitting device and the one or more second transmitting devices in a multicast or unicast manner.

Optionally, when each of the first transmitting device and the one or more second transmitting devices corresponds to one first indication, the first device sends the first indication of each transmitting device to the transmitting device in the unicast manner.

When the first device sends the first indication of the transmitting device to each of the first transmitting device and the one or more second transmitting devices in the unicast manner, a transmitting device (the third transmitting device) in a group different from groups in which the first transmitting device and the one or more second transmitting devices are located may detect first indications of the first transmitting device and the one or more transmitting devices based on control information. Therefore, the third transmitting device may learn of a status of sending of the signals and/or the channels by the first transmitting device and the one or more second transmitting devices to the receiving device. The status includes a reserved resource configuration status and a sending resource configuration status.

Optionally, the first device may further send the first indication to the third device. In other words, the first device may further send the first indication to a transmitting device in a group different from the groups in which the first transmitting device and the one or more second transmitting devices are located, so that the third transmitting device learns of the status of sending of the signals and/or the channels by the first transmitting device and the one or more second transmitting devices to the receiving device. The status includes the reserved resource configuration status and the sending resource configuration status.

Further, the third transmitting device may not send, as much as possible, a signal and/or a channel to the receiving device within the time domain resource range occupied by the signals and/or the channels sent by the first transmitting device and the one or more second transmitting devices to the receiving device. This manner helps reduce resource overheads caused by AGC performed by the receiving device based on the reserved resource configuration, or reduce performance loss caused by AGC adaptation due to the AGC operation performed by the receiving device.

S203: The transmitting device determines, based on the first indication, whether to perform resource reservation for the signal and/or the channel sent to the receiving device.

When the transmitting device is the first transmitting device, the first transmitting device determines, based on the first indication, to perform resource reservation for the signal and/or the channel sent to the receiving device. Therefore, the first transmitting device performs resource reservation when sending the signal and/or the channel to the receiving device. Correspondingly, the receiving device performs the AGC operation when receiving the signal and/or the channel from the first transmitting device.

When the transmitting device is the second transmitting device, the second transmitting device determines, based on the first indication, not to perform resource reservation for the signal and/or the channel sent to the receiving device. Therefore, the second transmitting device does not perform resource reservation when sending the signal and/or the channel to the receiving device. Correspondingly, when the receiving device receives the signal and/or the channel from the second transmitting device, the AGC operation does not need to be performed using the reserved resource, to reduce resource overheads caused by resource reservation for the AGC operation.

Optionally, after determining, based on the first indication, whether to perform resource reservation for the signal and/or the channel sent to the receiving device, the transmitting device may further determine, without using a result determined based on the first indication, whether to perform resource reservation for the signal and/or the channel sent to the receiving device.

For example, the second transmitting device determines, based on the first indication, not to perform resource reservation for the signal and/or the channel sent to the receiving device, but the second transmitting device determines, based on a channel change status, to perform resource reservation for the signal and/or the channel sent to the receiving device. Therefore, the second transmitting device performs resource reservation when sending the signal and/or the channel to the receiving device.

In a possible implementation, when determining whether to perform resource reservation for the signals and/or the channels sent to the receiving device, the first transmitting device and/or the one or more second transmitting devices send a second indication to the receiving device, where the second indication indicates whether to perform resource reservation for the signal and/or the channel sent to the receiving device. Therefore, the first transmitting device and the one or more second transmitting devices may separately send the signals and/or the channels to the receiving device based on each second indication sent by the first transmitting device and the one or more second transmitting devices.

Correspondingly, when the first device is the receiving device, the receiving device may further receive the second indications from the first transmitting device and/or the one or more second transmitting devices. Further, the receiving device receives the signals and/or the channels from the first transmitting device and the one or more second transmitting devices based on the second indications.

Optionally, the first transmitting device sends the second indication to the receiving device. Correspondingly, the receiving device receives the second indication from the first transmitting device.

Optionally, the one or more second transmitting devices send the second indication to the receiving device. Correspondingly, the receiving device receives the second indication from the one or more second transmitting devices.

For example, the first transmitting device is a transmitting terminal 1, and the one or more second transmitting devices include a transmitting terminal 2, a transmitting terminal 3, a transmitting terminal 4, and a transmitting terminal 5. The transmitting terminal 1 determines, based on the first indication, to perform resource reservation for a signal and/or a channel sent to the receiving terminal. The transmitting terminal 2, the transmitting terminal 3, and the transmitting terminal 5 determine, based on the first indication, not to perform resource reservation for signals and/or channels sent to the receiving terminal. The transmitting terminal 4 determines, based on a channel change, to perform resource reservation for a signal and/or a channel sent to the receiving terminal. The transmitting terminal 1 to the transmitting terminal 5 each send a second indication to the receiving terminal. Second indications sent by the transmitting terminal 1 and the transmitting terminal 4 to the receiving terminal indicate to perform resource reservation for signals and/or channels sent to the receiving terminal, and second indications sent by the transmitting terminal 2, the transmitting terminal 3, and the transmitting terminal 5 to the receiving terminal indicate not to perform resource reservation for signals and/or channels sent to the receiving terminal.

Therefore, when receiving the signals and/or the channels from the transmitting terminal 1 and the transmitting terminal 4, the receiving terminal performs the AGC operation using the reserved resource. When receiving the signals and/or the channels from the transmitting terminal 2, the transmitting terminal 3, and the transmitting terminal 5, the receiving terminal does not perform the AGC operation using the reserved resource, to reduce resource overheads caused by the AGC operation.

Optionally, when determining to perform resource reservation for the signals and/or the channels sent to the receiving device, transmitting devices in the first transmitting device and the one or more second transmitting devices send the second indication to the receiving device, where the second indication indicates to perform resource reservation for the signal and/or the channel sent to the receiving device. In this manner, when the receiving device does not receive a second indication from a transmitting device, the transmitting device does not perform, by default, resource reservation for a signal and/or a channel sent to the receiving device.

Optionally, when determining not to perform resource reservation for the signals and/or the channels sent to the receiving device, transmitting devices in the first transmitting device and the one or more second transmitting devices send the second indication to the receiving device, where the second indication indicates not to perform resource reservation for the signal and/or the channel sent to the receiving device. In this manner, when the receiving device does not receive a second indication from a transmitting device, the transmitting device performs, by default, resource reservation for a signal and/or a channel sent to the receiving device.

When transmitting devices in the first transmitting device and the one or more second transmitting devices determine to perform resource reservation for the signals and/or the channels sent to the receiving device, or determines not to perform resource reservation for the signals and/or the channels sent to the receiving device, the two implementations of sending the second indication to the receiving device can reduce signaling overheads.

In a possible implementation, the first transmitting device and the one or more second transmitting devices indicate, to the receiving device based on a 1-bit bit value in the second indication, whether the first transmitting device and the one or more second transmitting devices perform resource reservation for the signals and/or the channels sent to the receiving device. For example, when the 1-bit bit value in the second indication sent by each of the first transmitting device and the one or more second transmitting devices is 1, it indicates to perform resource reservation for the signal and/or the channel sent to the receiving device. When the 1-bit bit value in the second indication is 0, it indicates not to perform resource reservation for the signal and/or the channel sent to the receiving device.

In another possible implementation, each of the first transmitting device and the one or more second transmitting devices indicates, to the receiving device, the time domain resource occupied by the sent signal and/or channel, to indirectly indicate whether to perform resource reservation for the signal and/or the channel sent to the receiving device. For example, when the transmitting device indicates, to the receiving device, that the time domain resource occupied by the sent signal and/or channel includes a 1^{st} symbol in a 1^{st} slot, it indicates the transmitting device to perform resource reservation for the signal and/or the channel sent to the receiving device. When the transmitting device indicates, to the receiving device, that the time domain resource occupied by the sent signal and/or channel does not include the 1^{st} symbol in the 1^{st} slot, it indicates the transmitting device not to perform resource reservation for the signal and/or the channel sent to the receiving device.

A manner in which the first transmitting device and the one or more second transmitting devices indicate, to the receiving device based on the second indication, whether to send the signals and/or the channels to the receiving device helps the receiving device quickly determine a timefrequency resource used to receive the signal and/or the channel from each transmitting device. If the first transmitting device and the one or more second transmitting devices do not indicate, to the receiving device based on the second indication, whether to perform resource reservation for the signals and/or the channels sent to the receiving device, when receiving the signals and/or the channels, the receiving device needs to determine a transmission resource for the signals and/or the channels through detection performed based on a control signal. For example, the timefrequency resource for the to-be-received signals and/or channels can be determined only after detection of all possible control resources is completed.

In a possible implementation, the signals and/or the channels sent by the first transmitting device and the one or more second transmitting devices to the receiving device are periodically sent. In other words, the first transmitting device and the one or more second transmitting devices perform periodic services on the receiving device.

In this manner, when sending a periodic signal and/or a periodic channel to the receiving device in each periodicity, each of one or more transmitting devices determines, based on the first indication, whether to perform resource reservation for the periodic signal and/or the periodic channel sent to the receiving device. Therefore, when receiving the periodic signal and/or the periodic channel in each periodicity of each transmitting device, the receiving device does not need to perform the automatic gain control operation using the reserved resource by default, so that resource overheads can be reduced.

For example, in first sending periodicities of the first transmitting device and the one or more second transmitting devices, the first transmitting device determines, based on the first indication, to perform resource reservation for the signal and/or the channel sent to the receiving device, and the one or more second transmitting devices determine, based on the first indication, not to perform resource reservation for the signal and/or the channel sent to the receiving device. In second sending periodicities of the first transmitting device and the one or more second transmitting devices, the first transmitting device and the one or more second transmitting devices still determine, based on the first indication, whether to perform resource reservation for the signals and/or the channels sent to the receiving device. In other words, the first transmitting device still performs resource reservation, in the second sending periodicity, for the signal and/or the channel sent to the receiving device, and the one or more second transmitting devices still do not perform resource reservation, in the second sending periodicity, for the signal and/or the channel sent to the receiving device.

In this manner, in each sending periodicity of the first transmitting device and the one or more second transmitting devices, the receiving device may perform the AGC operation using the reserved resource configuration when receiving the signal and/or the channel from the first transmitting device, and does not perform the AGC operation using the reserved resource when receiving the signal and/or the channel from the one or more second transmitting devices, to greatly reduce resource overheads caused by resource reservation for AGC.

In a possible implementation, if an emergency occurs, for example, in the time domain resource occupied by the signal and/or the channel sent by the first transmitting device to the receiving device and the time domain resource range occupied by the signal and/or the channel sent by the one or more second transmitting devices to the receiving device, another transmitting device performs sending for the receiving device, and the first device indicates a transmitting device that sends a signal and/or a channel in a next transmission time interval (transmission time interval, TTI), slot, or transmission time unit to perform resource reservation for the signal and/or the channel sent to the receiving device, or notifies a transmitting device that sends a signal and/or a channel in a next TTI to cancel configuration of the first indication.

For example, if a transmitting device c between a second transmitting device a and a second transmitting device b performs sending for the receiving device, the first device may indicate the second transmitting device b to perform resource reservation for a signal and/or a channel sent to the receiving device, or notify the second transmitting device b to cancel configuration of a first indication of the second transmitting device b. Therefore, the second transmitting device b performs resource reservation when sending the signal and/or the channel to the receiving device, to increase a probability that the receiving device successfully receives the signal and/or the channel.

Optionally, if the receiving device does not correctly decode information about the signal and/or the channel from the second transmitting device b, the receiving device feeds back negative acknowledgement (negative acknowledgement, NACK) to the second transmitting device b.

In a possible implementation, when the transmitting device is any one of the one or more second transmitting devices, and a time domain resource occupied by an aperiodic signal and/or an aperiodic channel sent by the second transmitting device to the receiving device partially or completely overlaps, in time domain, a time domain resource occupied by a periodic signal and/or a periodic channel sent by the second transmitting device to the receiving device, but a frequency domain resource occupied by the aperiodic signal and/or the aperiodic channel sent by the second transmitting device to the receiving device is different from a frequency domain resource occupied by the periodic signal and/or the periodic channel sent by the second transmitting device to the receiving device, the receiving device may not perform the AGC operation using the reserved resource when receiving the aperiodic signal and/or the aperiodic channel from the second transmitting device.

Therefore, in this case, the first device may further send a fifth indication to the second transmitting device, where the fifth indication indicates not to perform resource reservation for the aperiodic signal and/or the aperiodic channel sent to the receiving device.

Optionally, when the transmitting device is any one of the one or more second transmitting devices, and a time domain resource occupied by an aperiodic signal and/or an aperiodic channel sent by the second transmitting device to the receiving device falls within a time domain resource range occupied by periodic signals and/or periodic channels sent by the first transmitting device and the one or more second transmitting devices to the receiving device, the first device may also send the fifth indication to the second transmitting device, where the fifth indication indicates not to perform resource reservation for the aperiodic signal and/or the aperiodic channel sent to the receiving device.

In embodiments of this application, the receiving device indicates the first transmitting device to perform resource reservation for the signal and/or the channel sent to the receiving device, and indicates the one or more second transmitting devices whose sending time is later than sending time of the first transmitting device not to perform resource reservation for the signal and/or the channel sent to the receiving device. This helps the receiving device perform the AGC operation using the reserved resource when receiving the signal and/or the channel from the first transmitting device, and does not need to perform the AGC operation using the reserved resource when receiving the signal and/or the channel from the one or more second transmitting devices. This can reduce resource overheads.

### 5. Communication method 300

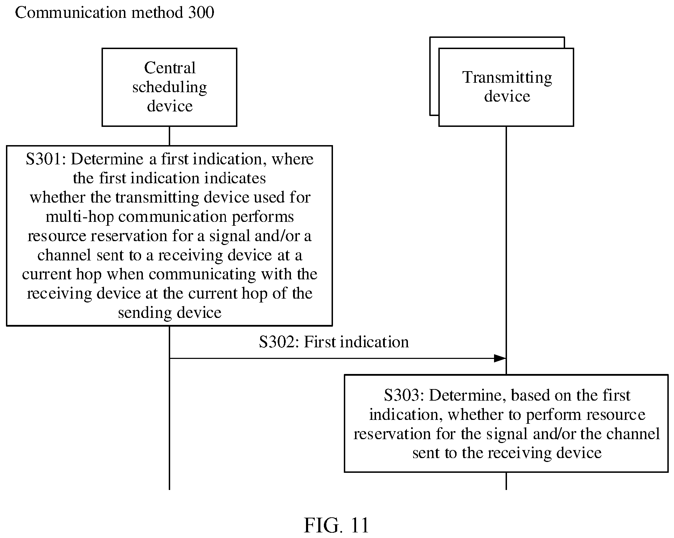

Embodiments of this application further provide a communication method 300 based on a centrally scheduled resource configuration manner. FIG. 11 is an interaction diagram of the communication method 300. In the communication method 300, a central scheduling device indicates, based on a first indication, whether a transmitting device used for multi-hop communication performs resource reservation for a signal and/or a channel sent to a receiving device at a current hop when communicating with the receiving device at the current hop of the transmitting device. The communication method 300 includes but is not limited to the following steps:
S301: The central scheduling device determines the first indication, where the first indication indicates whether the transmitting device used for multi-hop communication performs resource reservation for the signal and/or the channel sent to the receiving device at the current hop when communicating with the receiving device at the current hop of the transmitting device.

The multi-hop communication means that a signal and/or a channel is forwarded by a plurality of nodes from a source to a sink, that is, information transmission is completed by forwarding performed by a plurality of nodes on a link. For example, when being transmitted from a terminal 1 to a terminal 4, a signal a needs to be forwarded by a terminal 2 and a terminal 3. In other words, the terminal 1 sends the signal a to the terminal 2, the terminal 2 forwards the signal a to the terminal 3, and the terminal 3 forwards the signal a to the terminal 4.

It may be understood that, when determining whether the transmitting device used for multi-hop communication performs resource reservation for the signal and/or the channel sent to the receiving device at the current hop when communicating with the receiving device at the current hop of the transmitting device, the central scheduling device determines, by using the receiving device at the current hop of the transmitting device as a center and based on geographical locations and transmission delays/transmission time of a plurality of transmitting devices that communicates with the receiving device at the current hop, and/or a signal strength range of the signal and/or the channel received by the receiving device when the signal and/or the channel are/is sent to the receiving device, whether the transmitting device performs resource reservation for the signal and/or the channel sent to the receiving device at the current hop.

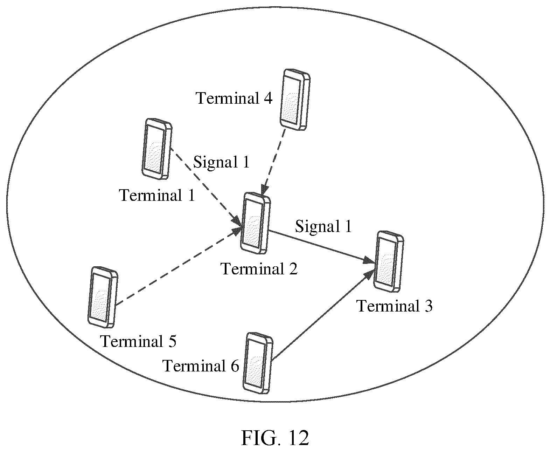

For example, as shown in FIG. 12, transmitting devices participating in multi-hop communication include the terminal 1, the terminal 2, and the terminal 3. The terminal 1 sends a signal 1 to the transmitting terminal 2, and the terminal 2 forwards the signal 1 to the terminal 3. In this case, the terminal 2 is a receiving terminal at a current hop when the terminal 1 communicates with the terminal 2, and the terminal 3 is a receiving terminal at a current hop when the terminal 2 communicates with the terminal 3. Transmit terminals that send signals and/or channels to the terminal 2 further include the terminal 4 and a terminal 5. If the terminal 1 and the terminal 4 are in a same geographical location range of the terminal 2 or a same transmission delay range, and/or the terminal 1 and the terminal 4 send signals and/or channels to the terminal 2, signal strength of the signals and/or the channels received by the terminal 2 from the terminal 1 and the terminal 4 is in a same signal strength range. It indicates that when the terminal 2 receives the signals and/or the channels from the terminal 1 and the terminal 4, receive power at which the terminal 2 receives the signals and/or the channels fluctuates within a small range. In addition, a time domain resource occupied by the signal and/or the channel sent by the terminal 1 to the terminal 2 is before a time domain resource occupied by the signal and/or the channel sent by the terminal 4 to the terminal 2. In this case, the central scheduling device may determine that the terminal 1 performs resource reservation for the signal and/or the channel sent to the terminal 2, so that the terminal 2 performs an AGC operation using the reserved resource when receiving the signal and/or the channel from the terminal 1.

In addition, a transmitting terminal that sends a signal and/or a channel to the terminal 3 further includes a terminal 6. If the terminal 2 and the terminal 6 are located in a same geographical location range of the terminal 3 or a same transmission delay range, and/or signal strength of signals and/or channels received by the terminal 3 from the terminal 2 and the terminal 6 falls within a same signal strength range when the terminal 2 and the terminal 6 send the signals and/or the channels to the terminal 3, it indicates that when the terminal 3 receives the signals and/or the channels from the terminal 2 and the terminal 6, receive power at which the terminal 3 receives the signals and/or the channels fluctuates within a small range. In addition, a time domain resource occupied by the signal and/or the channel sent by the terminal 2 to the terminal 3 is adjacent to a time domain resource occupied by the signal and/or the channel sent by the terminal 6 to the terminal 3 in time domain, and the time domain resource occupied by the signal and/or the channel sent by the terminal 2 to the terminal 3 is after the time domain resource occupied by the signal and/or the channel sent by the terminal 6 to the terminal 3. In this case, the central scheduling device determines that the terminal 6 performs resource reservation for the signal and/or the channel sent to the terminal 3, and the terminal 2 does not perform resource reservation for the signal and/or the channel sent to the terminal 3. Therefore, when receiving the signal and/or the channel from the terminal 2, the terminal 3 does not perform the AGC operation using the reserved resource, to reduce resource overheads caused by the AGC operation.

Optionally, the time domain resource occupied by the signal and/or the channel sent by the terminal 2 to the terminal 3 is after the time domain resource occupied by the signal and/or the channel sent by the terminal 6 to the terminal 3, and the time domain resource occupied by the signal and/or the channel sent by the terminal 2 to the terminal 3 is not adjacent to the time domain resource occupied by the signal and/or the channel sent by the terminal 6 to the terminal 3 in time domain. In this case, in the time domain resource occupied by the signal and/or the channel sent by the terminal 2 to the terminal 3 and a time domain resource range occupied by the signal and/or the channel sent by the terminal 6 to the terminal 3, no other transmitting terminal sends a signal and/or a channel to the terminal 3. In this case, when receiving the signals and/or the channels from the terminal 2 and the terminal 6, the terminal 3 does not receive a signal and/or a channel from another terminal. In this way, the central scheduling device may also determine that the terminal 2 does not perform resource reservation for the signal and/or the channel sent to the terminal 3, and the terminal 6 performs resource reservation for the signal and/or the channel sent to the terminal 3.

It can be learned that, when determining whether the transmitting terminal performs resource reservation for the signal and/or the channel sent to the receiving terminal at the current hop, the central scheduling device determines, by using the transmitting terminal and the receiving terminal at the current hop of the receiving terminal that communicates with the transmitting terminal as a center and based on a situation of each terminal that communicates with the receiving terminal at the current hop, whether the transmitting terminal performs resource reservation for the signal and/or the channel sent to the receiving terminal at the current hop.

In a possible implementation, the first indication further includes an identifier of the transmitting device. In this manner, the transmitting device used for multi-hop communication determines, based on the identifier of the transmitting device from the first indication, whether to perform resource reservation for the signal and/or the channel sent to the receiving device at the current hop.

In a possible implementation, the central scheduling device determines first indications of the plurality of transmitting devices in multi-hop communication, where a first indication of each transmitting device indicates whether the transmitting device in multi-hop communication performs resource reservation for the signal and/or the channel sent to the receiving device.

S302: The central scheduling device sends the first indication. Correspondingly, the transmitting device receives the first indication.

It may be understood that the central scheduling device sends the first indication of the first transmitting device to a 1^{st} transmitting device in multi-hop communication based on first control information, and sends a first indication of a remaining transmitting device to another transmitting device in multi-hop communication based on second control information. In this manner, a payload amount of the first control information can be reduced and reliability of the control information can be ensured.

For example, the terminal 1, the terminal 2, and the terminal 3 participate in multi-hop communication. The terminal 1 is a 1^{st} transmitting device in multi-hop communication. The central scheduling device sends the first indication of the terminal 1 to the terminal 1 based on SCI 1, and sends the first indication of the terminal 2 to the terminal 2 based on SCI 2. The SCI 1 and the SCI 2 may be configured for the terminal 1 by the central scheduling device. The terminal 1 sends the SCI 1 and the SCI 2 on a link between the terminal 1 and the terminal 2, and the SCI 2 indicates communication configuration between the terminal 2 and the terminal 3.

Optionally, the central scheduling device sends the first indication to the 1^{st} transmitting device in multi-hop communication based on the first control information, and sends a second indication to another transmitting device in multi-hop communication based on data information. In this manner, resource utilization efficiency can be improved.

S303: The transmitting device determines, based on the first indication, whether to perform resource reservation for the signal and/or the channel sent to the receiving device at the current hop.

The transmitting device is any transmitting device in multi-hop communication.

It may be understood that, each transmitting device in multi-hop communication may determine, based on the first indication of the transmitting device, whether the transmitting device performs resource reservation for the signal and/or the channel sent to the receiving device at the current hop, so that each transmitting device in multi-hop communication does not perform resource reservation for the signal and/or the channel sent to the receiving device by default. This helps the receiving devices at the current hop of some transmitting devices not perform the AGC operation using the reserved resource when receiving signals and/or channels from the some transmitting devices.

In embodiments of this application, the central scheduling device configures, based on the first indication, whether the transmitting device used for multi-hop communication performs resource reservation for the signal and/or the channel sent to the receiving device at the current hop when communicating with the receiving device at the current hop of the transmitting device. Therefore, the transmitting device participating in multi-hop communication determines, based on the first indication, whether to perform resource reservation for the signal and/or the channel sent to the receiving device at the current hop. This helps reduce resource overheads caused by the AGC operation performed by the receiving device at the current hop using the reserved resource.

### 6. Communication method 400

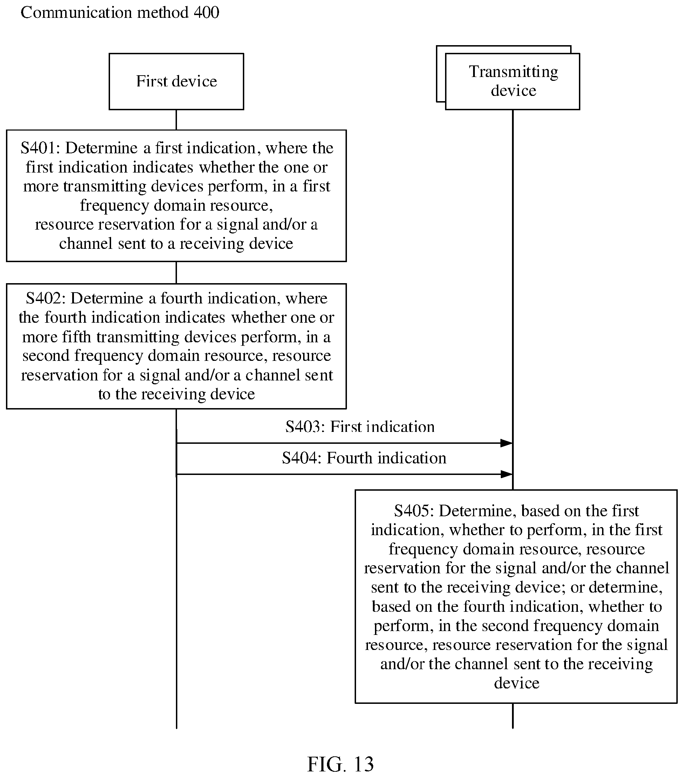

Embodiments of this application further provide a communication method 400. FIG. 13 is an interaction diagram of the communication method 400. In the communication method 400, when a time domain resource occupied by a signal and/or a channel sent by one or more transmitting devices to a receiving device overlaps a time domain resource occupied by a signal and/or a channel sent by one or more fifth transmitting devices to the receiving device, a first device indicates whether the one or more transmitting devices and the one or more fifth transmitting devices perform, in different frequency domain resources, resource reservation for signals and/or channels sent to the receiving device. Therefore, the one or more transmitting devices and the one or more fifth transmitting devices may send the signals and/or the channels to the receiving device in different frequency domain resources, and each transmitting device may determine, based on a first indication, whether to perform resource reservation for the signal and/or the channel sent to the receiving device. The communication method 400 includes but is not limited to the following steps:
S401: The first device determines the first indication, where the first indication indicates whether the one or more transmitting devices perform, in a first frequency domain resource, resource reservation for the signal and/or the channel sent to the receiving device.
S402: The first device determines a fourth indication, where the fourth indication indicates whether the one or more fifth transmitting devices perform, in a second frequency domain resource, resource reservation for the signal and/or the channel sent to the receiving device.

It may be understood that the one or more transmitting devices and the one or more fifth transmitting devices are transmitting devices that send signals and/or channels to the receiving device.

The time domain resource occupied by the signal and/or the channel sent by the one or more transmitting devices to the receiving device overlaps the time domain resource occupied by the signal and/or the channel sent by the one or more fifth transmitting devices to the receiving device.

That the time domain resource occupied by the signal and/or the channel sent by the one or more transmitting devices to the receiving device overlaps the time domain resource occupied by the signal and/or the channel sent by the one or more fifth transmitting devices to the receiving device includes: The time domain resource occupied by the signal and/or the channel sent by the one or more transmitting devices to the receiving device partially or completely overlaps the time domain resource occupied by the signal and/or the channel sent by the one or more fifth transmitting devices to the receiving device.

When the time domain resource occupied by the signal and/or the channel sent by the one or more transmitting devices to the receiving device overlaps the time domain resource occupied by the signal and/or the channel sent by the one or more fifth transmitting devices to the receiving device, the first device indicates whether the one or more transmitting devices and the one or more fifth transmitting devices perform, in different frequency domain resources, resource reservation for the signals and/or the channels sent to the receiving device. Different frequency domain resources may mean that different carriers are included, or different bandwidth parts (bandwidth part, BWP) are included.

Therefore, the one or more transmitting devices and the one or more fifth transmitting devices may send the signals and/or the channels to the receiving device in different frequency domain resources, and each transmitting device may determine, based on a first indication, whether to perform resource reservation for the signal and/or the channel sent to the receiving device, that is, each transmitting device does not perform resource reservation for the signal and/or the channel sent to the receiving device by default. Further, when receiving the signal and/or the channel from each of the one or more transmitting devices and the one or more fifth transmitting devices, the receiving device does not perform an AGC operation by default. This helps reduce resource overheads caused by the AGC operation performed by the receiving device using the reserved resource.

In addition, for an implementation of resource reservation, refer to the descriptions in the communication method 100. Details are not described again.

An execution sequence of S401 and S402 is not limited in embodiments of this application. For example, S401 may be performed before S402, or may be performed after S402.

S403: The first device sends the first indication. Correspondingly, the transmitting device receives the first indication.

S404: The first device sends a fourth indication. Correspondingly, the transmitting device receives the fourth indication.

An execution sequence of S403 and S404 is not limited in embodiments of this application. For example, S403 may be performed before S404, or may be performed after S404.

S405: The transmitting device determines, based on the first indication, whether to perform, in the first frequency domain resource, resource reservation for the signal and/or the channel sent to the receiving device; or determines, based on the fourth indication, whether to perform, in the second frequency domain resource, resource reservation for the signal and/or the channel sent to the receiving device.

When sending the signal and/or the channel to the receiving device in the first frequency domain resource, the transmitting device determines, based on the first indication, whether to perform, in the first frequency domain resource, resource reservation for the signal and/or the channel sent to the receiving device. The transmitting device sends the signal and/or the channel to the receiving device in the first frequency domain resource based on a determining result.

When the transmitting device sends the signal and/or the channel to the receiving device in the second frequency domain resource, that is, the transmitting device is any one of the one or more fifth transmitting devices, the transmitting device determines, based on the fourth indication, whether to perform, in the second frequency domain resource, resource reservation for the signal and/or the channel sent to the receiving device. The transmitting device sends the signal and/or the channel to the receiving device in the second frequency domain resource based on a determining result.

It can be learned that in embodiments of this application, when the time domain resource occupied by the signal and/or the channel sent by the one or more transmitting devices to the receiving device overlaps the time domain resource occupied by the signal and/or the channel sent by the one or more fifth transmitting devices to the receiving device, the first device indicates whether the one or more transmitting devices and the one or more fifth transmitting devices perform, in different frequency domain resources, resource reservation for the signals and/or the channels sent to the receiving device. Therefore, the one or more transmitting devices and the one or more fifth transmitting devices may send the signals and/or the channels to the receiving device in different frequency domain resources, and each transmitting device may determine, based on the first indication, whether to perform resource reservation for the signal and/or the channel sent to the receiving device. Further, when receiving the signal and/or the channel from each of the one or more transmitting devices and the one or more fifth transmitting devices, the receiving device does not perform the AGC operation by default. This helps reduce resource overheads caused by the AGC operation performed by the receiving device using the reserved resource.

To implement functions in the methods provided in the foregoing embodiments of this application, the first device and the transmitting device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

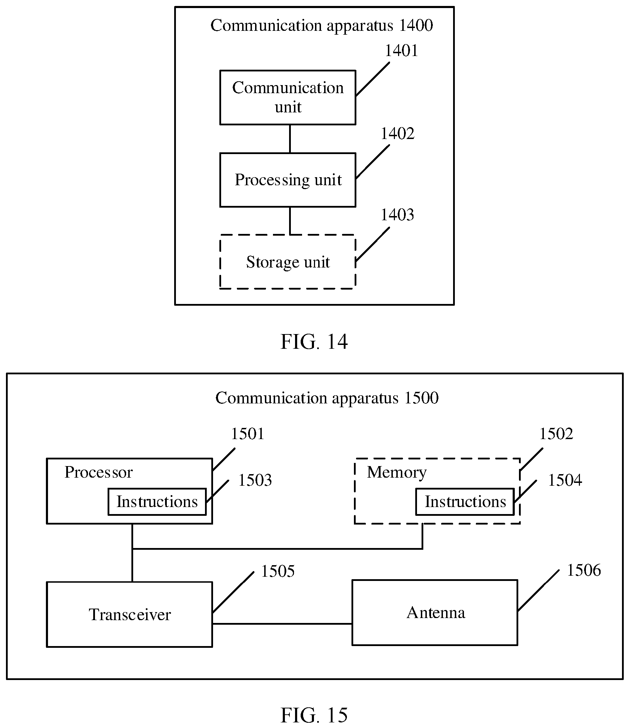

As shown in FIG. 14, an embodiment of this application provides a communication apparatus 1400. The communication apparatus 1400 may be a component (for example, an integrated circuit or a chip) of a first device, or may be a component (for example, an integrated circuit or a chip) of a transmitting device. The communication apparatus 1400 may include a communication unit 1401 and a processing unit 1402. Optionally, the communication apparatus may further include a storage unit 1403.

In a possible design, one or more units in FIG. 14 may be implemented by one or more processors, or implemented by one or more processors and memories, or implemented by one or more processors and transceivers, or implemented by one or more processors, memories, and transceivers. This is not limited in embodiments of this application. The processor, the memory, and the transceiver may be disposed separately, or may be integrated.

The communication apparatus 1400 implements functions of the first device or the transmitting device described in embodiments of this application. For example, the communication apparatus 1400 includes a module, a unit, or a means (means) corresponding to the first device performing steps related to a transmit end described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

In a possible design, the communication apparatus 1400 may include a processing unit 1402 and a communication unit 1401.

The processing unit 1402 is configured to determine a first indication, where the first indication indicates whether one or more transmitting devices perform resource reservation for a signal and/or a channel sent to a receiving device.

The communication unit 1401 is configured to send the first indication to the one or more transmitting devices.

In an optional implementation, the first indication specifically indicates a first transmitting device to perform resource reservation for a signal and/or a channel sent to the receiving device, and indicates one or more second transmitting devices not to perform resource reservation for a signal and/or a channel sent to the receiving device; and a time domain resource occupied by the signal and/or the channel sent by the one or more second transmitting devices to the receiving device is located after a time domain resource occupied by the signal and/or the channel sent by the first transmitting device to the receiving device.

In an optional implementation, both the first transmitting device and the one or more second transmitting devices are located in a first geographical location range of the receiving device or a first transmission delay range; and/or when the first transmitting device and the one or more second transmitting devices send signals and/or channels to the receiving device, signal strength of the signals and/or the channels received by the receiving device falls within a first signal strength range.

In an optional implementation, time domain resources occupied by the signals and/or the channels sent by the first transmitting device and the one or more second transmitting devices to the receiving device are consecutive in time domain; or time domain resources occupied by the signals and/or the channels sent by the first transmitting device and the one or more second transmitting devices to the receiving device are inconsecutive in time domain, and no third transmitting device sends a signal and/or a channel to the receiving device between the time domain resources occupied by the signals and/or the channels sent by the first transmitting device and the one or more second transmitting devices to the receiving device.

The third transmitting device is a transmitting device located outside the first geographical location range of the receiving device or the first transmission delay range, and/or a transmitting device that sends a signal and/or a channel to the receiving device, where signal strength of the signal and/or the channel received by the receiving device is outside the first signal strength range.

In an optional implementation, the communication unit 1401 is further configured to receive a second indication from the first transmitting device and/or the one or more second transmitting devices, where the second indication indicates whether to perform resource reservation for a signal and/or a channel sent to the receiving device. The processing unit 1402 is further configured to receive the signals and/or the channels from the first transmitting device and the one or more second transmitting devices based on the second indication.

In an optional implementation, the communication unit 1401 is further configured to send a third indication. The third indication indicates one or more fourth transmitting devices to adjust, to a first time domain resource, a time domain resource occupied by a signal and/or a channel sent by the one or more fourth transmitting devices to the receiving device; the fourth transmitting device is a transmitting device located in the first geographical location range of the receiving device or the first transmission delay range, and/or a transmitting device that sends a signal and/or a channel to the receiving device, where signal strength of the signal received by the receiving device falls within the first signal strength range; and the fourth transmitting device includes the first transmitting device and/or the one or more second transmitting devices.

In an optional implementation, when the one or more transmitting devices and the receiving device are used for multi-hop communication, the first indication specifically indicates whether a transmitting device used for multi-hop communication performs resource reservation for a signal and/or a channel sent to a receiving device at a current hop when communicating with the receiving device at the current hop of the transmitting device.

In an optional implementation, the signal and/or the channel sent by the one or more transmitting devices to the receiving device are/is periodically sent.

In an optional implementation, the resource reservation includes: puncturing a symbol used to send a signal and/or a channel to the receiving device, or repeatedly sending, on a symbol, a signal and/or a channel sent to the receiving device.

In an optional implementation, the first indication specifically indicates whether the one or more transmitting devices perform, in a first frequency domain resource, resource reservation for the signal and/or the channel sent to the receiving device.

In an optional implementation, the communication unit 1401 is further configured to send a fourth indication, where the fourth indication indicates whether one or more fifth transmitting devices perform, in a second frequency domain resource, resource reservation for a signal and/or a channel sent to the receiving device. A time domain resource occupied by the signal and/or the channel sent by the one or more transmitting devices to the receiving device overlaps a time domain resource occupied by the signal and/or the channel sent by the one or more fifth transmitting devices to the receiving device.

This embodiment of this application and the foregoing method embodiments are based on a same concept, and bring same technical effect. For a specific principle, refer to the descriptions of the foregoing embodiments. Details are not described again.

In another possible design, the communication apparatus 1400 may include a processing unit 1402 and a communication unit 1401.

The communication unit 1401 is configured to receive a first indication, where the first indication indicates whether one or more transmitting devices perform resource reservation for a signal and/or a channel sent to a receiving device.

The processing unit 1402 is configured to determine, based on the first indication, whether to perform resource reservation for the signal and/or the channel sent to the receiving device.

In an optional implementation, the first indication specifically indicates a first transmitting device to perform resource reservation for a signal and/or a channel sent to the receiving device, and indicates one or more second transmitting devices not to perform resource reservation for a signal and/or a channel sent to the receiving device; and a time domain resource occupied by the signal and/or the channel sent by the one or more second transmitting devices to the receiving device is located after a time domain resource occupied by the signal and/or the channel sent by the first transmitting device to the receiving device.

In an optional implementation, both the first transmitting device and the one or more second transmitting devices are located in a first geographical location range of the receiving device or a first transmission delay range; and/or when the first transmitting device and the one or more second transmitting devices send signals and/or channels to the receiving device, signal strength of the signals and/or the channels received by the receiving device falls within a first signal strength range.

In an optional implementation, time domain resources occupied by the signals and/or the channels sent by the first transmitting device and the one or more second transmitting devices to the receiving device are consecutive in time domain; or time domain resources occupied by the signals and/or the channels sent by the first transmitting device and the one or more second transmitting devices to the receiving device are inconsecutive in time domain, and no third transmitting device sends a signal and/or a channel to the receiving device between the time domain resources occupied by the signals and/or the channels sent by the first transmitting device and the one or more second transmitting devices to the receiving device.

The third transmitting device is a transmitting device located outside the first geographical location range of the receiving device or the first transmission delay range, and/or a transmitting device that sends a signal and/or a channel to the receiving device, where signal strength of the signal and/or the channel received by the receiving device is outside the first signal strength range.

In an optional implementation, the communication unit 1401 is further configured to send a second indication, where the second indication indicates whether to perform resource reservation for a signal and/or a channel sent to the receiving device. The processing unit 1402 is further configured to send the signal and/or the channel to the receiving device based on the second indication.

In an optional implementation, the communication unit 1401 is further configured to receive a third indication, where the third indication indicates to adjust, to a first time domain resource, a time domain resource occupied by a signal and/or a channel sent to the receiving device. The processing unit 1402 is further configured to adjust, to the first time domain resource, the time domain resource occupied by the signal and/or the channel sent to the receiving device.

In an optional implementation, when the one or more transmitting devices and the receiving device are used for multi-hop communication, the first indication specifically indicates whether a transmitting device used for multi-hop communication performs resource reservation for a signal and/or a channel sent to a receiving device at a current hop when communicating with the receiving device at the current hop of the transmitting device.

In an optional implementation, the signal and/or the channel sent by the one or more transmitting devices to the receiving device are/is periodically sent.

In an optional implementation, the resource reservation includes: puncturing a symbol used to send a signal and/or a channel to the receiving device, or repeatedly sending, on a symbol, a signal and/or a channel sent to the receiving device.

In an optional implementation, the first indication specifically indicates whether the one or more transmitting devices perform, in a first frequency domain resource, resource reservation for the signal and/or the channel sent to the receiving device.

In an optional implementation, the communication unit 1401 is further configured to receive a fourth indication, where the fourth indication indicates whether one or more fifth transmitting devices perform, in a second frequency domain resource, resource reservation for a signal and/or a channel sent to the receiving device. A time domain resource occupied by the signal and/or the channel sent by the one or more transmitting devices to the receiving device overlaps a time domain resource occupied by the signal and/or the channel sent by the one or more fifth transmitting devices to the receiving device.

This embodiment of this application and the foregoing method embodiments are based on a same concept, and bring same technical effect. For a specific principle, refer to the descriptions of the foregoing embodiments. Details are not described again.

An embodiment of this application further provides a communication apparatus 1500. FIG. 15 is a diagram of a structure of the communication apparatus 1500. The communication apparatus 1500 may be a first device, or may be a chip, a chip system, a processor, or the like that supports the first device in implementing the foregoing method. The communication apparatus 1500 may alternatively be a transmitting device, or may be a chip, a chip system, a processor, or the like that supports the transmitting device in implementing the foregoing method. The apparatus may be configured to implement the methods described in the foregoing method embodiments. For details, refer to the descriptions in the foregoing method embodiments.

The communication apparatus 1500 may include one or more processors 1501. The processor 1501 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to control a communication apparatus (for example, a base station, a baseband chip, a terminal, a terminal chip, a distributed unit DU, or a central unit CU), execute a software program, and process data of the software program.

Optionally, the communication apparatus 1500 may include one or more memories 1502. The memory may store instructions 1504, and the instructions may be run on the processor 1501, so that the communication apparatus 1500 performs the method described in the foregoing method embodiments. Optionally, the memory 1502 may further store data. The processor 1501 and the memory 1502 may be disposed separately, or may be integrated together.

The memory 1502 may include but is not limited to a non-volatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, or a portable compact disc read-only memory (Compact Disc Read-Only Memory, CD-ROM).

Optionally, the communication apparatus 1500 may further include a transceiver 1505 and an antenna 1506. The transceiver 1505 may be referred to as a transceiver unit, a transceiver machine, a transceiver circuit, or the like, and is configured to implement a transceiver function. The transceiver 1505 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The communication apparatus 1500 is a first device. The processor 1501 is configured to perform S101 in the communication method 100, S201 in the communication method 200, S301 in the communication method 300, and S401 and S402 in the communication method 400. The transceiver 1505 is configured to perform S102 in the communication method 100, S202 in the communication method 200, S302 in the communication method 300, and S403 and S404 in the communication method 400.

The communication apparatus 1500 is a transmitting device. The processor 1501 is configured to perform S103 in the communication method 100, S203 in the communication method 200, S303 in the communication method 300, and S405 in the communication method 400. The transceiver 1505 is configured to perform S102 in the communication method 100, S202 in the communication method 200, S302 in the communication method 300, and S403 and S404 in the communication method 400.

In another possible design, the processor 1501 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1501 may store instructions 1503. When the instructions 1503 are run on the processor 1501, the communication apparatus 1500 may be enabled to perform the methods described in the foregoing method embodiments. The instructions 1503 may be fixed in the processor 1501. In this case, the processor 1501 may be implemented by hardware.

In still another possible design, the communication apparatus 1500 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

A scope of the communication apparatus described in embodiments of this application is not limited thereto, and the structure of the communication apparatus may not be limited by FIG. 15. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may alternatively include a storage component configured to store data and instructions;
(3) an ASIC, like a modem (modulator); or
(4) a module that can be embedded in another device.

In embodiments of this application, the communication apparatus 1500 and the chip may further perform the implementations of the foregoing communication apparatus 1400. A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application and the method embodiments shown in the communication method 100 to the communication method 400 are based on a same concept, and bring same technical effect. For a specific principle, refer to the descriptions of the embodiments shown in the communication method 100 to the communication method 400. Details are not described again.

This application further provides a computer-readable storage medium, configured to store computer instructions. When the instructions are executed by a communication apparatus, a function in any one of the foregoing method embodiments is implemented.

This application further provides a computer program product including computer instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes one or more network devices and one or more terminal devices. In another possible design, the system may further include another device that interacts with the network device and the terminal device in the solutions provided in this application. The transmitting device and the receiving device in embodiments of this application are different terminal devices in the system. A central scheduling device may be a network device in the system, or may be a terminal device in the system.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The terms "first", "second", and the like in this specification, the claims, and the accompanying drawings of this application are intended to distinguish between different objects, but do not describe a specific sequence. "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in this application, "a plurality of" means two or more than two. The term "and/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between the associated objects. Both "when ..." and "if" mean that corresponding processing is performed in an objective case, are not intended to limit time, do not require a determining action during implementation, and do not mean that there is another limitation.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining a first indication, wherein the first indication indicates whether one or more transmitting devices perform resource reservation for a signal and/or a channel sent to a receiving device; and
sending the first indication to the one or more transmitting devices.

2. The method according to claim 1, wherein
the first indication specifically indicates a first transmitting device to perform resource reservation for a signal and/or a channel sent to the receiving device, and indicates one or more second transmitting devices not to perform resource reservation for a signal and/or a channel sent to the receiving device; and
a time domain resource occupied by the signal and/or the channel sent by the one or more second transmitting devices to the receiving device is located after a time domain resource occupied by the signal and/or the channel sent by the first transmitting device to the receiving device.

3. The method according to claim 2, wherein
both the first transmitting device and the one or more second transmitting devices are located in a first geographical location range of the receiving device or a first transmission delay range; and/or
when the first transmitting device and the one or more second transmitting devices send signals and/or channels to the receiving device, signal strength of the signals and/or the channels received by the receiving device falls within a first signal strength range.

4. The method according to claim 2 or 3, wherein
time domain resources occupied by the signals and/or the channels sent by the first transmitting device and the one or more second transmitting devices to the receiving device are consecutive in time domain; or
time domain resources occupied by the signals and/or the channels sent by the first transmitting device and the one or more second transmitting devices to the receiving device are inconsecutive in time domain, and no third transmitting device sends a signal and/or a channel to the receiving device between the time domain resources occupied by the signals and/or the channels sent by the first transmitting device and the one or more second transmitting devices to the receiving device; and
the third transmitting device is a transmitting device located outside the first geographical location range of the receiving device or the first transmission delay range, and/or a transmitting device that sends a signal and/or a channel to the receiving device, wherein signal strength of the signal and/or the channel received by the receiving device is outside the first signal strength range.

5. The method according to any one of claims 2 to 4, wherein the method further comprises:
receiving a second indication from the first transmitting device and/or the one or more second transmitting devices, wherein the second indication indicates whether to perform resource reservation for a signal and/or a channel sent to the receiving device; and
receiving the signals and/or the channels from the first transmitting device and the one or more second transmitting devices based on the second indication.

6. The method according to any one of claims 2 to 5, wherein the method further comprises:
sending a third indication, wherein
the third indication indicates one or more fourth transmitting devices to adjust, to a first time domain resource, a time domain resource occupied by a signal and/or a channel sent by the one or more fourth transmitting devices to the receiving device;
the fourth transmitting device is a transmitting device located in the first geographical location range of the receiving device or the first transmission delay range, and/or a transmitting device that sends a signal and/or a channel to the receiving device, wherein signal strength of the signal received by the receiving device falls within the first signal strength range; and
the fourth transmitting device comprises the first transmitting device and/or the one or more second transmitting devices.

7. The method according to any one of claims 1 to 6, wherein when the one or more transmitting devices and the receiving device are used for multi-hop communication,
the first indication specifically indicates whether a transmitting device used for multi-hop communication performs resource reservation for a signal and/or a channel sent to a receiving device at a current hop when communicating with the receiving device at the current hop of the transmitting device.

8. The method according to any one of claims 1 to 7, wherein
the signal and/or the channel sent by the one or more transmitting devices to the receiving device are/is periodically sent.

9. The method according to any one of claims 1 to 8, wherein
the resource reservation comprises: puncturing a symbol used to send a signal and/or a channel to the receiving device, or repeatedly sending, on a symbol, a signal and/or a channel sent to the receiving device.

10. The method according to any one of claims 1 to 9, wherein
the first indication specifically indicates whether the one or more transmitting devices perform, in a first frequency domain resource, resource reservation for the signal and/or the channel sent to the receiving device.

11. The method according to claim 10, wherein the method further comprises:
sending a fourth indication, wherein the fourth indication indicates whether one or more fifth transmitting devices perform, in a second frequency domain resource, resource reservation for a signal and/or a channel sent to the receiving device; and
a time domain resource occupied by the signal and/or the channel sent by the one or more transmitting devices to the receiving device overlaps a time domain resource occupied by the signal and/or the channel sent by the one or more fifth transmitting devices to the receiving device.

12. A communication method, wherein the method comprises:
receiving a first indication, wherein the first indication indicates whether one or more transmitting devices perform resource reservation for a signal and/or a channel sent to a receiving device; and
determining, based on the first indication, whether to perform resource reservation for the signal and/or the channel sent to the receiving device.

13. The method according to claim 12, wherein
the first indication specifically indicates a first transmitting device to perform resource reservation for a signal and/or a channel sent to the receiving device, and indicates one or more second transmitting devices not to perform resource reservation for a signal and/or a channel sent to the receiving device; and
a time domain resource occupied by the signal and/or the channel sent by the one or more second transmitting devices to the receiving device is located after a time domain resource occupied by the signal and/or the channel sent by the first transmitting device to the receiving device.

14. The method according to claim 13, wherein
both the first transmitting device and the one or more second transmitting devices are located in a first geographical location range of the receiving device or a first transmission delay range; and/or
when the first transmitting device and the one or more second transmitting devices send signals and/or channels to the receiving device, signal strength of the signals and/or the channels received by the receiving device falls within a first signal strength range.

15. The method according to claim 13 or 14, wherein
time domain resources occupied by the signals and/or the channels sent by the first transmitting device and the one or more second transmitting devices to the receiving device are consecutive in time domain; or
time domain resources occupied by the signals and/or the channels sent by the first transmitting device and the one or more second transmitting devices to the receiving device are inconsecutive in time domain, and no third transmitting device sends a signal and/or a channel to the receiving device between the time domain resources occupied by the signals and/or the channels sent by the first transmitting device and the one or more second transmitting devices to the receiving device; and
the third transmitting device is a transmitting device located outside the first geographical location range of the receiving device or the first transmission delay range, and/or a transmitting device that sends a signal and/or a channel to the receiving device, wherein signal strength of the signal and/or the channel received by the receiving device is outside the first signal strength range.

16. The method according to any one of claims 12 to 15, wherein the method further comprises:
sending a second indication, wherein the second indication indicates whether to perform resource reservation for a signal and/or a channel sent to the receiving device; and
sending the signal and/or the channel to the receiving device based on the second indication.

17. The method according to any one of claims 12 to 16, wherein the method further comprises:
receiving a third indication, wherein the third indication indicates to adjust, to a first time domain resource, a time domain resource occupied by a signal and/or a channel sent to the receiving device; and
adjusting, to the first time domain resource, the time domain resource occupied by the signal and/or the channel sent to the receiving device.

18. The method according to any one of claims 12 to 17, wherein when the one or more transmitting devices and the receiving device are used for multi-hop communication,
the first indication specifically indicates whether a transmitting device used for multi-hop communication performs resource reservation for a signal and/or a channel sent to a receiving device at a current hop when communicating with the receiving device at the current hop of the transmitting device.

19. The method according to any one of claims 12 to 18, wherein
the signal and/or the channel sent by the one or more transmitting devices to the receiving device are/is periodically sent.

20. The method according to any one of claims 12 to 19, wherein
the resource reservation comprises: puncturing a symbol used to send a signal and/or a channel to the receiving device, or repeatedly sending, on a symbol, a signal and/or a channel sent to the receiving device.

21. The method according to any one of claims 12 to 20, wherein
the first indication specifically indicates whether the one or more transmitting devices perform, in a first frequency domain resource, resource reservation for the signal and/or the channel sent to the receiving device.

22. The method according to any one of claims 12 to 21, wherein
receiving a fourth indication, wherein the fourth indication indicates whether one or more fifth transmitting devices perform, in a second frequency domain resource, resource reservation for a signal and/or a channel sent to the receiving device; and
a time domain resource occupied by the signal and/or the channel sent by the one or more transmitting devices to the receiving device overlaps a time domain resource occupied by the signal and/or the channel sent by the one or more fifth transmitting devices to the receiving device.

23. A communication apparatus, wherein the apparatus comprises a module or a unit configured to implement the method according to any one of claims 1 to 11, or a module or a unit configured to implement the method according to any one of claims 12 to 22.

24. A communication apparatus, comprising a processor, wherein the processor is configured to perform the method according to any one of claims 1 to 11 by using a logic circuit or by running a computer program, or perform the method according to any one of claims 12 to 22 by using a logic circuit or by running a computer program.

25. The apparatus according to claim 24, further comprising a transceiver, wherein the transceiver is configured to receive and send a signal.

26. The apparatus according to claim 24 or 25, further comprising a memory, wherein the memory is configured to store the computer program.

27. A computer-readable storage medium, wherein the computer-readable storage medium is configured to store instructions, and when the instructions are run on a computer, the method according to any one of claims 1 to 11 is performed, or the method according to any one of claims 12 to 22 is performed.

28. A computer program product comprising instructions, wherein when the computer program product runs on a computer, the method according to any one of claims 1 to 11 is performed, or the method according to any one of claims 12 to 22 is performed.

29. A communication system, wherein the system comprises a receiving device and a transmitting device, the receiving device is configured to perform the method according to any one of claims 1 to 11, and the transmitting device is configured to perform the method according to any one of claims 12 to 22.
